# EUROPÄISCHE PATENTANMELDUNG

(11) **EP 4 235 842 A1**
(43) Veröffentlichungstag der Anmeldung: **30.08.2023**
(21) Anmeldenummer: 22158301.6
(22) Anmeldetag: 23.02.2022
(51) Int. Cl.: H01M 4/06, H01M 4/24, H01M 4/38, H01M 4/50, H01M 4/62, H01M 4/90, H01M 6/14, H01M 12/06

(54) **SILIZIUM-ANODE UMFASSEND BESCHICHTETE SILIZIUMPARTIKEL, VERFAHREN ZUR HERSTELLUNG UND DEREN VERWENDUNG**

(71) Anmelder: Lang, Dr. Jürgen Erwin, 76229 Karlsruhe (DE)
(72) Erfinder: LANG, Jürgen Erwin, 76229 Karlsruhe (DE); KORTH, Karsten, 79639 Grenzach-Wyhlen (DE); BÖSS, Florian, 63452 Hanau (DE); MOUSSALLEM, Imad, 63457 Hanau (DE)
(74) Vertreter: Bendele, Tanja

(57) **Zusammenfassung**

Gegenstand der Erfindung ist eine Silizium-Anode, insbesondere zur Verwendung in elektrochemischen Primärzellen mit alkalischem Elektrolyten, in Form eines dreidimensionalen Formkörpers mit äußerer Oberfläche und innerer Oberfläche, wobei der dreidimensionale Formkörper Siliziumpartikel einer Partikelgröße von 1 nm bis 200 Mikrometer umfasst, die Kontaktpunkte, insbesondere aus Silizium, zu benachbarten Siliziumpartikeln aufweisen, über die Kontaktpunkte sind die benachbarten Siliziumpartikel stoffschlüssig miteinander verbunden, insbesondere besteht die Verbindung zwischen den Siliziumpartikeln aus Silizium, wobei der dreidimensionale Formkörper auf mindestens einem Teil seiner äußeren Oberfläche eine Beschichtung einer leitfähigen metallischen Legierung oder eines Metalls zur elektrischen Kontaktierung aufweist. Ferner ist Gegenstand der Erfindung ein Verfahren zur Herstellung der Silizium-Anode sowie die Verwendung dieser in einer Primärzelle oder einer Batterie umfassend eine Vielzahl an Primärzellen.

## Beschreibung

Gegenstand der Erfindung ist eine Silizium-Anode, insbesondere zur Verwendung in elektrochemischen Primärzellen mit alkalischem Elektrolyten, in Form eines dreidimensionalen Formkörpers mit äußerer Oberfläche und innerer Oberfläche, wobei der dreidimensionale Formkörper Siliziumpartikel einer Partikelgröße von 1 nm bis 20 Mikrometer umfasst, die Kontaktpunkte, insbesondere aus Silizium, zu benachbarten Siliziumpartikeln aufweisen, über die Kontaktpunkte sind die benachbarten Siliziumpartikel stoffschlüssig miteinander verbunden, insbesondere besteht die Verbindung zwischen den Siliziumpartikeln aus Silizium, wobei der dreidimensionale Formkörper auf mindestens einem Teil seiner äußeren Oberfläche und optional einem Teil der inneren Oberfläche eine Beschichtung einer leitfähigen metallischen Legierung oder eines Metalls zur elektrischen Kontaktierung aufweist. Ferner ist Gegenstand der Erfindung ein Verfahren zur Herstellung der Silizium-Anode sowie die Verwendung dieser in einer Primärzelle oder einer Batterie umfassend eine Vielzahl an Primärzellen.

Aufgrund des zunehmenden Bedarfes an E-Mobility im Personennahverkehr durch Elektroautos, Elektrofahrräder sowie elektrisch betriebene Busse etc. als auch bei zunehmender dezentraler Stromgewinnung besteht ein enormer Bedarf an umweltverträglichen Batterien, deren Komponenten einerseits unbeschränkt verfügbar und andererseits unbeschränkt recyclebar, umweltverträglich und/oder weiter verwendbar sein sollen. Silizium ist ein auf der Erde unbegrenzt verfügbarer Rohstoff. Darüber hinaus müssen die Komponenten einer Batterie kostengünstig verfügbar sein.

Des Weiteren ist es bekannt, durch ständige Zufuhr eines Brennstoffes in Brennstoffzellen, die eine galvanische Zelle aufweisen, in Gegenwart eines Oxidationsmittels elektrische Energie zu erzeugen. Grundsätzlich ist dieses Prinzip auch für Silizium-Luft-Batterien denkbar. Zudem sind übliche Silizium enthaltende Lithium-Ionen-Sekundärbatterien täglich weltweit im Einsatz.

Aufgabe der Erfindung war es auf wirtschaftliche Weise, eine Silizium-Anode für eine Silizium enthaltende galvanische Zelle, insbesondere eine Primärzelle, bereitzustellen, die eine gute Leistungsdichte sowie eine hohe Angangsspannung bereitstellen kann. Des Weiteren bestand die Aufgabe eine Silizium-Anode bereitzustellen, die vorzugsweise frei von Lithium ist, wobei vorzugsweise frei von Lithium bedeutet, dass der Gehalt an Lithium in der Silizium-Anode unter 1 Gew.-% in Bezug auf die Gesamtzusammensetzung der Silizium-Anode beträgt. Bevorzugt weist eine mit der Silizium-Anode ausgerüstete Primärzelle im geladenen Zustand unter 0,1 Gew.-% Lithium in der Gesamtzusammensetzung der Primärzelle auf. Vorzugsweise soll der Gehalt an Lithium im Elektrodenmaterial der Anode im geladenen Zustand unter 0,1 Gew.-% betragen. Eine weitere Aufgabe bestand darin eine Anode bereitzustellen, die Edukte und/oder Reaktionsprodukte aufweist, die aus Recyclingprozessen stammen, Nebenprodukte sind und/oder in Recyclingprozessen weiterverwendet werden können.

Die Aufgaben wurden gelöst durch eine Silizium-Anode nach Anspruch 1 und 15, ein Verfahren zur Herstellung nach Anspruch 13 sowie die Verwendung nach den Ansprüchen 16 und 17, bevorzugte Ausführungsformen werden in den Unteransprüchen und detailliert in der Beschreibung offenbart.

Gegenstand der Erfindung ist eine Silizium-Anode, insbesondere zur Verwendung in elektrochemischen Primärzellen mit alkalischem Elektrolyten, wobei die Silizium-Anode ein dreidimensionaler Formkörper mit äußerer Oberfläche und innerer Oberfläche ist, und wobei der dreidimensionale Formkörper umfasst Siliziumpartikel einer Partikelgröße von 1 nm bis 30 Mikrometer, und die Siliziumpartikel an Kontaktpunkten zu benachbarten Siliziumpartikeln stoffschlüssig miteinander verbunden sind, insbesondere wird der Stoffschluss gebildet durch Silizium, wobei der dreidimensionale Formkörper auf mindestens einem Teil seiner äußeren Oberfläche eine Beschichtung einer leitfähigen metallischen Legierung oder eines Metalls zur elektrischen Kontaktierung aufweist.

Erfindungsgemäß erfolgt die stoffschlüssige Verbindung der Siliziumpartikel untereinander mittels des Siliziums der Siliziumpartikel. Dabei ist es bevorzugt, wenn a) die stoffschlüssig miteinander verbundenen Siliziumpartikel miteinander i) verschmolzen und/oder ii) versintert und/oder iii) verpresst sind, oder b) der stoffschlüssige Verbund an den Kontaktpunkten der Siliziumpartikel durch Silizium-Material der Siliziumpartikel gebildet wird, indem die Silizium-Partikel miteinander i) verschmolzen und/oder ii) versintert und/oder iii) verpresst sind.

Nach einer bevorzugten Ausführungsform weist die Silizium-Anode einen Formkörper auf, der eine Dichte von 0,1 g/cm³ bis 2,3 g/cm³ aufweist. Weiter bevorzugt weist der Formkörper eine Dichte von 0,5 g/cm³ bis 2,1 g/cm³auf, bevorzugt von 0,5 bis 1,8 g/cm³, weiter bevorzugt von 1,3 bis 1,8 g/cm³.

Bevorzugt wird die äußere Oberfläche des Formkörpers gebildet durch die nach außen gerichteten Oberflächen der Siliziumpartikel und optional der nach außen gerichteten Oberflächen der Kontaktpunkte und die innere Oberfläche des Formkörpers wird gebildet durch die nach innen gerichteten Oberflächen der Siliziumpartikel und optional der nach innen gerichteten Oberflächen der Kontaktpunkte.

Bevorzugt ist die äußere Oberfläche des Formkörpers, die durch die Siliziumpartikel gebildet wird mindestens 5%, bevorzugt 10%, besonders bevorzugt mindestens 15% größer als die Oberfläche des Hüllkörpers des Formkörpers. Der Hüllkörper ist der einfache geometrische Körper des Formkörpers, der in den Ebenen der den Formkörper ausbildenden Flächen liegt.

Nach einer besonders bevorzugten Ausführungsform weist die Silizium-Anode einen Formkörper auf, der ausgewählt ist aus, Polyeder, insbesondere Platonischer Körper, Kugel, Halbkugel, Kegel, insbesondere ausgewählt aus Prisma, Zylinder, Quader und Würfel, wobei ein plattenartiger Formkörper besonders bevorzugt ist. Der Formkörper kann auch als eine Tablette, Brikett, stabförmig oder in jeder denkbaren dreidimensionalen Geometrie vorliegen. Besonders bevorzugt ist der Formkörper ein ebenes Flächenelement, insbesondere ein rechteckiges Flächenelement einer definierten Höhe, insbesondere ein Quader optional mit runden Ecken. Ebenso bevorzugt ist der Formkörper eine ebene Platte oder eine ebene Scheibe, vorzugsweise eine rechteckige Platte oder Scheibe, optional mit runden Kanten oder eine runde Platte oder Scheibe. Alle dazwischen liegenden Geometrien sind möglich.

Der Formkörper der Silizium-Anode kann als ebener Formkörper einer definierten Höhe, insbesondere als ebene Platte oder ebene Scheibe vorliegen, wobei die Platte oder Scheibe eine runde, rechteckige oder rechteckige mit mindestens einer runden Kante einander gegenüberliegende Vorder- und Rückseite aufweist, insbesondere weist die Platte oder Scheibe einen rechteckigen Querschnitt optional mit runden Kanten auf, wobei die Vorderseite eingebaut in eine Primärzelle einem Elektrolyten zugewandt sein wird und die Rückseite eine Beschichtung mit einer leitfähigen metallischen Legierung oder eines Metalls zur elektrischen Kontaktierung aufweisen kann. In einer gleichbevorzugten Alternative werden sowohl Vorder- als auch die Rückseite dem Elektrolyten zugewandt sein, wobei insbesondere in diesem Fall die Beschichtung im Bereich einer Seitenfläche und/oder auf der äußeren Oberfläche in einem Bereich der Vorder- und/oder Rückseite im Bereich des äußeren Umfangs des Formkörpers vorgesehen ist.

Ferner ist es bevorzugt, wenn der dreidimensionale Formkörper der Silizium-Anode als im Wesentlichen ebene Platte oder Scheibe vorliegt, wobei die Platte oder Scheibe
i) eine Vorderseite und eine der Vorderseite gegenüberliegende Rückseite aufweist, wobei die Vorderseite einem Elektrolyten zugewandt sein wird und die Rückseite zumindest teilweise eine Beschichtung mit einer leitfähigen metallischen Legierung oder eines Metalls zur elektrischen Kontaktierung aufweist, oder die Platte oder Scheibe
ii) eine Vorderseite und eine der Vorderseite gegenüberliegende Rückseite sowie eine oder mehrere die Vorder- und Rückseite verbindende(n), umlaufende(n), Seitenfläche(n) aufweist, wobei die Vorder- und Rückseite zumindest teilweise einem Elektrolyten zugewandt sein werden und ein Bereich der Seitenfläche(n) und optional ein Bereich der Vorder- und/oder Rückseite, der an die Seitenfläche(n) angrenzt, eine Beschichtung mit einer leitfähigen metallischen Legierung oder eines Metalls zur elektrischen Kontaktierung aufweist, insbesondere beträgt der Kontakt-Bereich der Vorder- und/oder Rückseite 1/3 bis 1/5000 der äußeren Oberfläche der Vorder- und/oder Rückseite.

Bevorzugt weist mindestens eine Seitenfläche und optional ein an diese Seitenfläche angrenzender Bereich der Vorder- und/oder Rückseite, der der Platte eine Beschichtung mit einer leitfähigen metallischen Legierung oder eines Metalls zur elektrischen Kontaktierung aufweist, insbesondere beträgt der Bereich der Vorder- und/oder Rückseite 1/10 bis 1/1000 der äußeren Oberfläche der Vorder- und/oder Rückseite.

Die Beschichtung erfolgt erfindungsgemäß mit einem Weichlot oder Hartlot, weiter bevorzugt mit einem Edelmetall oder Edelmetall enthaltenden Legierung, besonders bevorzugt mit Gold.

Ferner ist es bevorzugt, wenn das Massenverhältnis vom Formkörper der Silizium Anode zur Beschichtung 1000000 : 1 bis 10 : 1 beträgt, insbesondere von 100000 : 1 bis 100 : 1, besonders bevorzugt 10000 : 1 bis 50 :1.

Die Beschichtung weist vorzugsweise eine Schichtdicke auf von 10 nm bis 5 mm auf, bevorzugt von 100 nm bis 5 mm.

Die Beschichtung der leitfähigen metallischen Legierung oder eines Metalls zur elektrischen Kontaktierung umfasst vorzugsweise Elemente der Gruppen 3 bis 11 des Periodensystems, vorzugsweise der Gruppen 8 bis 11, und besonders bevorzugt der Gruppen 3 bis 11 der IV, V und VI Periode des Periodensystems (Hauptgruppen 3 bis 11). Dabei sind die Elemente der Gruppe 8. bis 11. und der V und VI Periode besonders bevorzugt. Bevorzugt sind Edelmetalle, umfassend Gold, Ruthenium, Rhodium, Osmium, Iridium, Platin und/oder Silber.

Ferner kann die Silizium-Anode bevorzugt zur Inhibierung der korrosiven Auflösung der Silizium-Anode in einem stark alkalischen, wässrigen Elektrolyten eine zumindest teilweise Inhibierungsbeschichtung auf der äußeren und/oder inneren Oberfläche des Formkörpers aufweisen. Vorteilhaft sind die Siliziumpartikel silanisiert und/oder mit Siloxanen belegt oder kovalent gebunden. Dabei ist vorteilhaft der Formkörper auf mindestens einem Teil seiner äußeren und/oder inneren Oberfläche, die vorzugsweise keine Beschichtung mit einer leitfähigen metallischen Legierung oder eines Metalls zur elektrischen Kontaktierung aufweist, zumindest teilweise mit mindestens einem funktionellen Silan, funktionellen Siloxan, einer Mischung von funktionellen Silanen, einer Mischung von funktionellen Silanen und funktionellen Siloxanen und/oder einer Mischung von Siloxanen versehen oder ausrüstbar ist. Die Silane und/oder Siloxane können kovalent gebunden, adsorbiert oder elektrostatisch an oder auf der jeweiligen Oberfläche angeordnet sein.

Bevorzugte funktionelle Silane umfassen Alkyltrialkoxysilane, Dialkyldialkoxysilane, (Polyalkylenoxid)alkylsilane, Glycidyl-alkyltrialkoxysilane, Glycidylalkyl(alkyl)dialkoxysilane, sowie deren Hydrolyse- und optional Kondensationsprodukte Alkylsiloxane, Dialkylsiloxane, (Polyalkylenoxid)alkylsiloxane, Glycidylalkylsiloxane, Glycidylalkyl(alkyl)siloxane. Die jeweiligen Alkyl-Gruppen können linear, verzweigt und/oder cyclisch sein und können umfassen 1 bis 24 C-Atome, bevorzugt 1 bis 10 C-Atome, besonders bevorzugt 1 bis 8 C-Atome. Die Alkoxy-Gruppen sind vorzugsweise ausgewählt aus Methoxy, Ethoxy, Propoxy und
Butoxy. Des Weiteren sind alle Hydroxy-funktionellen Silane der vorgenannten Silane umfasst, die durch Hydrolyse der jeweiligen Alkoxysilane erhältlich sind.

Die Silane und/oder Siloxane können vorzugsweise mittels einer oder zwei Si-O-Bindungen im alkalischen Elektrolyten an Si-O-Gruppen aufweisenden Oberflächen kovalent gebunden sein. Vorzugsweise weisen die Silane und/oder Siloxane zwei Alkyl-Gruppen auf. Dabei kann es bevorzugt sein, wenn die Silane mit Gruppen funktionalisiert sind die entweder eine deutliche sterische Behinderung der Hydroxidionen bewirken, so dass diese nicht ungehindert an die Oberfläche der Silizium-Anode vordringen können oder die funktionellen Gruppen umfassen (Polyalkylenoxid)alkyl-Gruppen, die flexibel die Oberfläche der Silizium-Anode belegen können und so die Korrosion für eine gewisse Zeit inhibieren können.

Gleichfalls ist es bevorzugt, wenn zusätzlich oder alternativ der wässrige, alkalische Elektrolyt ein Polyalkylenoxid, oder ein Gemisch von Polyalkylenoxiden enthält. Dabei ist es bevorzugt, wenn die Alkylene ausgewählt sind aus bivalenten Alkylenen, die 1 bis 6 C-Atome umfassen, und die bivalenten Alkylene vorzugsweise ausgewählt sind aus Methylen, Ethylen, n-Propylen, iso-Propylen und Butylen. Weiter ist es bevorzugt, wenn das Polyalkylenoxid ausgewählt ist aus HO(C₂H₄O)ₙH mit n größer gleich 4, R¹O(C₂H₄O)ₙ₁R² mit R¹ und R² jeweils unabhängig ausgewählt aus -H, -Alkyl, -C=O-Alkyl mit Alkyl jeweils unabhängig mit 1 bis 6 C-Atomen, wobei R¹ oder R nicht gleich H sind, mit n1 = größer gleich 4, HO(C₃H₆O)ₘH mit m größer gleich 4, R³O(C₃H₆O)ₘ₁R⁴ mit R³ und R⁴ jeweils unabhängig ausgewählt aus H, Alkyl, -C=O-Alkyl, mit Alkyl jeweils unabhängig mit 1 bis 6 C-Atomen, mit m1 größer gleich 4, wobei R³ oder R⁴ nicht gleich H sind, Polyether der vorgenannten Polyalkylenoxide umfassend Ethylenoxid und Propylenoxid-Einheiten und Gemischen von Polyalkylenoxiden umfassend mindestens zwei unterschiedliche Polyalkylenoxide.

Bevorzugte Polyaklylenoxid-Gruppen, insbesondere umfassend Polyalkylenoxid-Gruppen, aufweisende Verbindungen können vorzugsweise ein Molekulargewicht von 200 g/mol bis 35.000 g/mol, bevorzugt 200 bis 1500 g/mol aufweisen. Dabei ist es weiter bevorzugt, wenn das mittlere Molekulargewicht von 200 g/mol bis 1500 g/mol beträgt.

Eine erfindungsgemäße Silizium-Anode kann vorteilhaft mit einem Film oder einer Beschichtung umfassend Polyalkylenoxid bereitgestellt werden. Weiter bevorzugt ist ein Kit umfassend mindestens eine Silizium-Anode in einem Polyalkylenoxid in einem Einweg- oder Mehrwegbehälter.

Ebenso Gegenstand der Erfindung ist eine Silizium-Anode, die Siliziumpartikel mit einer mindestens bimodalen Partikelgrößenverteilung umfasst, wobei die Siliziumpartikel umfassen i) Siliziumpartikel der Partikelgröße von 1 nm bis 50 nm, und ii) Siliziumpartikel mit Partikelgrößen von 60 bis 200 nm.

Alternativ kann die Partikelgrößenverteilung umfassen i) Siliziumpartikel der Partikelgröße von 1 nm bis 500 nm, und ii) Siliziumpartikel mit Partikelgrößen von 1 bis 30 Mikrometer. Alternativ oder zusätzlich können umfasst sein i) Siliziumpartikel der Partikelgröße von 1 nm bis 25 nm, und ii) Siliziumpartikel mit Partikelgrößen von 30 nm bis 100 Mikrometer.

Vorzugsweise sind zwischen Siliziumpartikel mit einer Partikelgröße von 1 nm bis 30000 nm Kontaktpunkte ausgebildet, indem Partikel unterschiedlicher Partikelgrößen mit einander i) verschmolzen und/oder ii) versintert und/oder iii) verpresst sind. Vorzugsweise sind zwischen Siliziumpartikeln mit einer Partikelgröße i) von 1 nm bis 500 nm und optional einer Partikelgröße ii) von 510 nm bis 30 Mikrometer Kontaktpunkte ausgebildet, indem Partikel unterschiedlicher Partikelgrößen mit einander i) verschmolzen und/oder ii) versintert und/oder iii) verpresst sind. Alternativ kann die Partikelgrößenverteilung der Siliziumpartikel trimodal sein und Partikel umfassen i) von 1 nm bis 500 nm, ii) von 800 nm bis 5 Mikrometer und iii) von 7 Mikrometer bis 30 Mikrometer, wobei die Siliziumpartikel vorzugsweise über Kontaktpunkte miteinander stoffschlüssig verbunden sind. Unter stoffschlüssig wird erfindungsgemäß vorzugsweise integral verbunden verstanden. Daher sind die Siliziumpartikel vorzugsweise über die Kontaktpunkte integral miteinander verbunden.

Erfindungsgemäß besonders bevorzugt weisen die Siliziumpartikel des Formkörpers der Silizium-Anode einen Gehalt an Eisen, Zink, Kalium, Aluminium, Kohlenstoff, Calcium, optional Titan, optional Kupfer von jeweils größer gleich 0,01 mg/kg auf. Gleichfalls Gegenstand der Erfindung ist ein Formkörper umfassend Siliziumpartikel, die einen Gehalt an Eisen, Aluminium von größer gleich 0,02 mg/kg aufweisen. Ferner ist Gegenstand der Erfindung ein Formkörper umfasst Siliziumpartikel und optional Kohlenstoff und Silizium enthaltende Partikel und optional Partikel mindestens einer allotropen Kohlenstoffmodifikation, wobei die Siliziumpartikel, insbesondere die Silizium-Anode, einen Gehalt an Eisen von größer gleich 0,02 mg/kg aufweist. Als Kohlenstoff und Silizium enthaltende Partikel und mindestens eine allotrope Kohlenstoffmodifikation aufweisende Partikel können umfasst sein Carbon-Black, kugelförmige Nanopartikel umfassend Graphit, Graphit und polycyclischen Kohlenstoff. Diese Partikel weisen vorzugsweise einen Durchmesser von größer gleich 10 nm, insbesondere von 10 nm bis 300 nm auf. Die Oberfläche dieser Partikel beträgt vorzugsweise von mindestens 1 m²/g bis 600 m²/g. Vorzugsweise umfassen die Kohlenstoff und Silizium enthaltenden Partikel Siliciumcarbid und/oder die Partikel mindestens einer allotropen Kohlenstoffmodifikation umfassen Diamant, polycyclische Kohlenstoffmodifikationen, Graphit, Fulleren, Graphen. Diamant kann aus einem Recyclingprozess mittels Drahtsägen stammen.

Ein besonders bevorzugtes alternative oder zusätzliches Anodenmaterial kann Siridion^{®}-Black umfassen. Nach einer Alternative kann das Anodenmaterial umfassen Silizium enthaltende Partikel mit einem Gehalt an Kohlenstoff, insbesondere mit einem Gehalt von 1 bis kleiner 10 Gew.-% Kohlenstoff im Gesamtgehalt der Silizium-enthaltenden Partikel. Bevorzugte Anodenmaterialen können Gemische von Silizium Partikeln ohne Kohlenstoffgehalt und Silizium Partikel mit einem Kohlenstoffgehalt umfassen. Die erfindungsgemäß genannten Silizium-Partikel können auch als Mischungen umfassend definierte Fraktionen qualitativ unterschiedlich zusammengesetzter Silizium-Partikel vorliegen.

Nach einer Ausführungsform weist der Formkörper bevorzugt Siliziumpartikel und optional Kohlenstoff und Silizium enthaltende Partikel und optional Partikel mindestens einer allotropen Kohlenstoffmodifikation auf, wobei die Siliziumpartikel jeweils unabhängig voneinander, insbesondere die Silizium-Anode, jeweils unabhängig voneinander einen Gehalt an Eisen, Kalium, Zink, Aluminium, Kohlenstoff, Calcium, optional Titan, optional Kupfer, optional Sauerstoff von jeweils größer gleich 0,01 mg/kg aufweisen. Des Weiteren kann es bevorzugt sein, wenn der Gehalt in den Siliziumpartikeln, insbesondere der Silizium-Anode, beträgt:
- Eisen größer gleich 0,05 mg/kg,
- Aluminium größer gleich 0,01 mg/kg,
- Sauerstoff größer gleich 0,01 mg/kg,
- Kohlenstoff größer gleich 0,01 mg/kg,
- Kalium größer gleich 0,01 mg/kg,
- Calcium größer gleich 0,01 mg/kg,
- und optional Titan größer gleich 0,001 mg/kg,
- und optional Kupfer größer gleich 0,001 mg/kg.

Silizium-Anoden können Siliziumpartikel aufweisen mit i) einem Gehalt an Eisen von größer gleich 0,02 mg/kg, bevorzugt größer gleich 0,05 mg/kg, und/oder ii) die Silizium-Anode weist Eisen enthaltende Partikel auf, wobei die Eisen enthaltenden Partikel mit einem Gehalt an Eisen von größer gleich 90 Gew.-% in Bezug auf die Gesamtzusammensetzung der Eisen enthaltenden Partikel aufweisen, wobei die Eisen enthaltenden Partikel vorzugsweise eine Stahl-Legierung umfassen. Die Eisen enthaltenden Partikel mit einem Eisengehalt größer 90 % können beispielsweise aus einem Recyclingprozess stammen, z.B. aus der Aufarbeitung der Sägesuspension eines Wafer-Drahtsägeprozess. Ferner können die Siliziumpartikel oder die Silizium-Anode, einen Gehalt aufweisen an:
- Eisen größer gleich 5 mg/kg,
- Kohlenstoff größer gleich 5 mg/kg,
- Aluminium größer gleich 0,5 mg/kg,
- Sauerstoff größer gleich 0,5 mg/kg,
- Kalium größer gleich 0,5 mg/kg,
- Calcium größer gleich 5 mg/kg,
- und optional Titan größer gleich 0,01 mg/kg,
- und optional Kupfer größer gleich 0,05 mg/kg.

Die Siliziumpartikel können umfassen Primärpartikel, amorphe Siliziumpartikel, mono- oder polykristalline Siliziumpartikel. Als Primärpartikel gelten Partikel, die sich in einem thermischen Prozess der Herstellung von Siliziumpartikeln ausbilden und sich anschließend zusammenballen und dabei Aggregate und/oder Agglomerate ausbilden. Die Primärpartikel weisen dabei üblicherweise einen Durchmesser von 1 bis 200 nm auf, während die Aggregate und/oder Agglomerate von 300 bis 30 Mikrometer in mindestens einer Dimension aufweisen können. Eine bevorzugte Partikelgrößenverteilung von amorphen Siliziumpartikeln kann von 1 nm bis 700 nm betragen, insbesondere von 10 nm bis 500 nm, und die mono- bis polykristallinen eine Partikelgrößenverteilung von 800 nm bis 30 Mikrometer, insbesondere von 800 bis 30 Mikrometer. Des Weiteren kann es bevorzugt sein, wenn die mono- bis polykristallinen Siliziumpartikel bimodal mit Siliziumpartikeln im Bereich von 800 nm bis 9 Mikrometer und von 13 bis 20 Mikrometer vorliegen.

Gleichfalls können die Siliziumpartikel oder auch andere Partikel mit polymerisierbaren Monomeren in einer Zusammensetzung vorliegen, die geformt und polymerisiert und optional anschließend gesintert oder pyrolysiert wird.

Alternativ kann eine Silizium-Anode mit Formkörper erhältlich sein indem ein Verfahren, wie das Pulverspritzgießen angewendet wird. Beim Pulverspritzgießen werden Siliziumpartikel mit einem organischen Binder vermischt und dann auf einer Spritzgussmaschine in Form gebracht. Anschließend wird der Binder wieder entfernt und das Bauteil bei hoher Temperatur in einem Ofen gesintert. Alternativ ist eine Silizium-Anode mit Formkörper erhältlich durch Festphasensintern, Flüssigphasensintern mit einem Gemisch der Siliziumpartikel und einer Komponente mit einem niedrigeren Schmelzpunkt, die vorzugsweise durch Pyrolyse oder Erhitzen entfernbar ist.

Gegenstand der Erfindung ist auch ein Verfahren zur Herstellung einer Silizium-Anode sowie eine Silizium-Anode erhältlich nach dem Verfahren, wobei das Verfahren die Schritte umfasst
- Bereitstellen von Siliziumpartikeln einer Partikelgröße von 1 nm bis 200 Mikrometer, insbesondere mit einer mindestens bimodalen Partikelgrößenverteilung umfassend a) i) Partikel der Partikelgröße von 1 nm bis 50 nm, und ii) Partikel mit Partikelgrößen von 60 bis 200 Mikrometer, oder b) i) Partikel der Partikelgröße von 1 nm bis 500 nm, und ii) Partikel mit Partikelgrößen von 1 bis 30 Mikrometer, und
   A) optional Herstellen einer Zusammensetzung umfassend die Siliziumpartikel und mindestens ein polymerisierbares Monomer oder eine Mischung von polymerisierbaren Monomeren, und Formen der Zusammensetzung zu einem Rohling des dreidimensionalen Formkörpers, wie eines Grünkörpers, oder
   B) Formen der Siliziumpartikel zu einem Rohling des dreidimensionalen Formkörpers, und
- Erhitzten des Rohlings des dreidimensionalen Formkörpers, optional unter Überdruck, optional Abkühlen des erhaltenden Formkörpers, und
- Erhalten des dreidimensionalen Formkörpers mit äußerer Oberfläche und innerer Oberfläche umfassend die Siliziumpartikel, wobei insbesondere der dreidimensionale Formkörper umfasst Siliziumpartikel einer Partikelgröße von 1 nm bis 30 Mikrometer,
- Beschichten des dreidimensionalen Formkörpers umfassend die Siliziumpartikel auf mindestens einem Teil seiner äußeren Oberfläche mit einer Beschichtung einer leitfähigen metallischen Legierung oder eines Metalls zur elektrischen Kontaktierung, und
- Erhalten einer Silizium-Anode umfassend einen dreidimensionalen Formkörper umfassend die Siliziumpartikel, mit einer Beschichtung einer leitfähigen metallischen Legierung oder eines Metalls zur elektrischen Kontaktierung auf mindestens einem Teil seiner inneren und/oder äußeren Oberfläche.

Nach einer anderen Ausführungsform können Netzelektrode z.B. Eisengewebe, Stahlgewebe, Kohlenstoffgewebe, Silbergewebe usw. als Kontaktträger für die Siliziumpartikel verwendet werden, indem die Netzelektrode in Siliziumpartikel eingebettet und beispielsweise nach A) oder B) weiter prozessiert wird.

Nach einer bevorzugten Ausführungsform werden Siliziumpartikel mit einer Partikelgröße von 1 nm bis 30 Mikrometer aus einer aufgearbeiteten Sägesuspensionen im Wafer-Drahtsägeprozess stammend, verwendet, insbesondere mit einer bimodaler Partikelgrößenverteilung der silizium- und eisenhaltige Partikel.

Nach einer Ausführungsform wird das Erhitzen des Rohlings unter Druck durchgeführt, insbesondere mit größer 1,5 bar, bevorzugt mit größer gleich 10 bar, weiter bevorzugt mit größer gleich 50 bis 500 bar, wie bei 180 bar mit +/- 20 bar.

Das Erhitzen des Rohlings erfolgt vorzugsweise unterhalb des Schmelzpunktes der Siliziumpartikel. Dabei können die Siliziumpartikel mit n- oder p-Dotierung vorliegen und/oder die vorgenannten Metalle und/oder Kohlenstoffe aufweisen. Vorteilhaft erfolgt das Erhitzen der des Rohlings auf größer gleich 500 °C bis zur Schmelze, vorzugsweise von größer gleich 500 °C bis knapp unterhalb der Schmelztemperatur der Siliziumpartikel. Ein bevorzugter Temperaturbereich ist von 500 bis 1350 °C, bevorzugt von 550 bis 1100 °C. Das Erhitzen optional bei Überdruck erfolgt vorzugsweise für 2 Sekunden bis 2 Stunden, bevorzugt von 60 Sekunden bis 600 Sekunden, insbesondere von 30 bis 300 Sekunden.

Wurde keine Netzelektrode verwendet kann der heiße oder der abgekühlte Formkörper mit einer Kontaktierung bzw. Beschichtung versehen werden. Die Kontaktschicht/Beschichtung kann vorteilhaft mittels Sputtern aufgebracht werden. Nach einer Ausführungsform weist der Formkörper der Silizium-Anode eine Beschichtung von mindestens zwei Lagen einer leitfähigen metallischen Legierung oder eines Metalls zur elektrischen Kontaktierung auf mindestens einem Teil seiner äußeren Oberfläche. Bevorzugt werden zwei bis 20 Lagen aufgesputtert.

Alternative Methoden zur Beschichtung umfassen Tauchen, besprühen etc. mit einem dem Fachmann bekannten Lotwerkstoff oder Lötmittel.f

Nach einer Ausführungsform ist es bevorzugt, dass die in dem Verfahren eingesetzten Siliziumpartikel einen Gehalt an Eisen, Zink, Kalium, Sauerstoff, Aluminium, Kohlenstoff, Calcium, optional Titan, optional Kupfer von jeweils größer gleich 0,01 mg/kg aufweisen.

Ebenso Gegenstand der Erfindung ist die Verwendung von Siliziumpartikeln umfassend einen Gehalt an Eisen, Zink, Kalium, Sauerstoff, Aluminium, Kohlenstoff, Calcium, optional Titan, optional Kupfer, von jeweils unabhängig größer gleich 0,01 mg/kg zur Herstellung von Silizium-Anoden umfassend einen dreidimensionalen Formkörper mit äußerer Oberfläche und innerer Oberfläche, wobei der dreidimensionale Formkörper umfasst Siliziumpartikel einer Partikelgröße von 1 nm bis 200 Mikrometer, und die Siliziumpartikel an Kontaktpunkten zu benachbarten Siliziumpartikeln stoffschlüssig, insbesondere mittel Silizium-Material der Siliziumpartikel integral, mit einander verbunden sind, wobei vorzugsweise der dreidimensionale Formkörper auf mindestens einem Teil seiner äußeren Oberfläche eine Beschichtung einer leitfähigen metallischen Legierung oder eines Metalls zur elektrischen Kontaktierung aufweist.

Ferner ist Gegenstand der Erfindung die Verwendung einer Silizium-Anode als elektronenlieferndem Kraftstoff, insbesondere zur Verwendung als Elektronenquelle in einer Anode einer Primärzelle. Zudem ist Gegenstand der Erfindung die Verwendung der Silizium-Anoden als Anode in einer elektrochemischen Primärzelle oder als Anode in mindestens einer Primärzelle einer mehrzelligen Batterie, wobei die Batterie umfasst mindestens zwei bis 15.000 miteinander verbundene Primärzellen, vorzugsweise sind zwei bis 15.000 der miteinander verbundenen Primärzellen in Serie geschaltet, bevorzugt sind zwei bis 1000 Primärzellen in Serie geschaltet, wobei insbesondere die Silizium-Anode in allen Primärzellen die Anode bildet.

Die Silizium-Anode der vorliegenden Erfindung kann vorteilhaft in Form i) einer ebenen Scheibe oder Platte bei der die Rückseite mit der Beschichtung versehen ist in einer Primärzelle eingesetzt werden oder ii) als eine Vielzahl von Scheiben oder Platten, die in mindestens einem Stapel in einer Anode zusammengefast sind, vorliegen und in einer Primärzelle eingesetzt werden. Die Primärzellen können zu mehrzelligen Batterie verbunden werden. Bevorzugt sind Batterien mit mindestens zwei bis 15.000 mit einander verbundene Primärzellen, vorzugsweise sind die zwei bis 1000 mit einander verbundenen Primärzellen in Serie geschaltet.

Die Beschichtung der leitfähigen metallischen Legierung oder eines Metalls zur elektrischen Kontaktierung umfasst Elemente der Gruppen 3 bis 11, vorzugsweise der Gruppen 8 bis 11, und besonders bevorzugt der Gruppen 3 bis 11 der IV, V und VI Periode des Periodensystems (Hauptgruppen 3 bis 11), besonders bevorzugt sind die Elemente der Gruppe 8. bis 11. und der V und VI Periode. Bevorzugt sind Edelmetalle, umfassend Gold, Ruthenium, Rhodium, Osmium, Iridium, Platin und/oder Silber. Weiter bevorzugt sind Legierungen von Gold und Silber. Die Beschichtungen können aus der Gasphase nach der Herstellung des Formkörper aufgebracht werden oder in einer Alternativ auch mittels eines üblichen Druckverfahrens auf den Rohling aufgebracht werden und sodann zusammen in einem Schritt mit dem Rohling erhitzt werden, um die Silizium-Anoden zu erhalten.

Bevorzugte Primärzellen der Erfindung sind vorzugsweise frei von Lithium, wobei vorzugsweise wird unter frei von Lithium verstanden, dass der Gehalt an Lithium im geladenen Zustand in der Primärzelle, insbesondere umfassend die Anode, die Kathode und den Elektrolyten, kleiner gleich 1 Gew.-%, insbesondere kleiner gleich 0,1 Gew.-% in der Primärzelle beträgt, vorzugsweise beträgt der Gehalt an Lithium im Elektrodenmaterial der Anode im geladenen Zustand kleiner gleich 0,1 Gew.-%. Elektrochemische Primärzellen und insbesondere Anoden für elektrochemische Prozesse mit einem Lithiumgehalt unter 1 Gew.-%, vorzugsweise kleiner gleich 0,1 Gew.-%, gelten als frei von Lithium und werden erfindungsgemäß als reine Silizium-Zellen oder reine Silizium-Anoden bezeichnet.

Entsprechend einer bevorzugten Ausführungsvariante umfasst das Silizium, insbesondere die Silizium-Partikel, bevorzugt die amorphen Silizium-Partikel, des Anodenmaterials Dotierstoffe, wobei die Dotierstoffe ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon sowie Elemente der Eisengruppe, besonders bevorzugt sind Bor, Aluminium, Phosphor und/oder Eisen. Die Elemente der 13. Hauptgruppe (neue Nomenklatur: Gruppe 13 des Periodensystems) sind Elektronen-Akzeptoren neuer Nomenklatur. Als Elektronen-Donatoren werden Elemente der 15. Hauptgruppe (neue Nomenklatur: Gruppe 15 des Periodensystems) eingesetzt.

Nach einer Ausführungsform umfasst das Silizium, insbesondere die Silizium-Partikel des Anodenmaterials, Dotierstoffe, wobei die Dotierstoffe zu größer gleich 1 Element der 15. Hauptgruppe auf 10⁶ Silizium-Atome und/oder größer gleich 1 Element der 13. Hauptgruppe auf 10⁶ Silizium-Atome vorliegen, insbesondere größer gleich 1 Element der 15. Hauptgruppe auf 10⁴ Silizium-Atome und/oder größer gleich 1 Element der 13. Hauptgruppe auf 10⁴ Silizium-Atome, bestimmt mittels dem Fachmann bekannter ICP-MS Analyse (Inductive Plasma Discharge-Massenspektroskopie, welche unter Wikipedia ausführlich beschrieben ist: https://de.wikipedia.org/wiki/Massenspektrometrie_mit_induktiv_gekoppeltem_Plasma). Alternativ kann die Analyse auch durch GD-MS erfolgen (GDMS/GD-MS-Glimmentladungs-Massenspektroskopie mit Secondary Electron Multiplier- (SEM) und/oder Faraday-Detector gemäß Quelle:https://assets.thermofisher.com/TFS-Assets/CMD/brochures/BR-30066-GD-MS-ELEMENT-GD-PLUS-BR30066-EN.pdf). Den Farady-Detektor vorzugsweise für die Messungen von Spuren-Konzentrationen im %-Bereich.

Nach einer alternativen, bevorzugten Ausführungsform umfasst das Silizium, insbesondere die amorphen Silizium-Partikel, des Anodenmaterials Dotierstoffe, wobei die Dotierstoffe größer gleich 10² Atome (ca. 100 Gew.-ppm, abhängig von Atomgewicht des Dotierstoffes) der 15. Hauptgruppe auf 10⁶ Silizium-Atome und/oder größer gleich 10² Atome der 13. Hauptgruppe auf 10⁶ Silizium-Atome vorliegen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich 2*10² Atome der 15. Hauptgruppe auf 10⁶ Silizium-Atome größer gleich 2*10² Atome der 13. Hauptgruppe auf 10⁶ Silizium-Atome vorliegen. Die vorstehenden Gehalte an Dotierstoffen im Silizium des Anodenmaterials können inhomogen im Silizium verteilt sein, sowie die Gehalte integral über die Gesamtmenge des Siliziums im Anodenmaterial im Mittel vorliegen. Zur Bestimmung obiger Gehalte wird eine Prüfmenge von 1 g Prüfmenge mittels GD-MS oder ICPMS vermessen, wobei zwischen beiden Methoden gewisse Abweichungen bestimmt werden können, vorzugsweise wird ein Mittelwert bestimmt. Entsprechend weiteren bevorzugten, alternativen Ausführungsformen umfasst das Silizium, insbesondere die amorphen Silizium-Partikel, des Anodenmaterials Dotierstoffe, wobei die Dotierstoffe größer gleich 10³ Atome der 15. Hauptgruppe auf 10⁶ Silizium-Atome und/oder größer gleich 10³ Atome der 13. Hauptgruppe auf 10⁶ Silizium-Atome betragen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich 10¹⁹ Atome der 15. Hauptgruppe auf 2*10²² Silizium-Atome und/oder größer gleich 10¹⁹ Atome der 13. Hauptgruppe auf 2*10²² Silizium-Atome umfassen.

Die Silizium-Partikel können auf atomarer Ebene eine Legierung von Silizium mit mindestens einem Element der 13. oder 15 Hauptgruppe aufweisen, wobei das mindestens eine Element der 13. oder 15. Hauptgruppe ganz besonders bevorzugt mit größer gleich 0,5*10²¹ Atomen/cm³ vorliegt und ausgewählt aus mindestens einem Elektronendonator und Elektronenakzeptor ist. Dabei liegt die Legierung von Silizium auf atomarer Ebene mit mindestens einem Element der 13. oder 15. Hauptgruppe als eine amorphe oder kristalline Phase vor. Besonders bevorzugt weisen die Siliziumpartikel einen Gehalt an Bor von 10 ppm-Gew bis 2,5 Gew.-% in Bezug auf den Gesamtgehalt von 100 Gew.-% des Siliziumpartikels auf, bevorzugt ist ein Gehalt von 10 ppm-Gew bis 1,8, besonders bevorzugt von 1,8 Gew.-% plus/minus 0,2 Gew.-%. Analog kann die Siliziumfolie einen Gehalt an Bor von 10 ppm-Gew bis 1,8 Gew.-% in Bezug auf den Gesamtgehalt von 100 Gew.-% der Siliziumfolie aufweisen. Es wurde überraschend gefunden, dass die Legierungen von Silizium und Bor antikorrosiv wirken, so dass die Lebensdauer der Primärzelle verlängert wird.

Gegenstand der Erfindung ist eine Silizium-Anode umfassend Siliziumpartikel, die einen Gehalt an Bor von 10 Gew.-ppm bis 1,8 Gew.-% aufweisen.

Des Weiteren wird ein wirtschaftliches Kathodenmaterial bereitgestellt, das vorzugsweise eine physikalische Mischung von Mangandioxid (MnO₂) und einem Leitfähigkeitsvermittler umfasst. Der optionale Gehalt des Leitfähigkeitsvermittlers in den Elektroden der Primärzelle kann in der Kathode und in der Anode unterschiedlich hoch sein. Für Mangandioxid ist ein Gehalt an Leitfähigkeitsvermittler im Material der Kathode von circa 5 bis 65 Gew.-%, bevorzugt 5 bis 15 Gew.-% üblich. Generell kann der Gehalt des Leitfähigkeitsvermittlers von 5 bis 60 Gew.-% im Material der Kathode betragen. Alternativ bevorzugt können Gehalte im Bereich von 15 bis 20 Gew.-% für einen geringeren Widerstand oder auch als Obergrenze 30 bis 60 Gew.-% sein. Dabei beträgt das Material der Kathode in Summe immer 100 Gew.-%.

Gegenstand der Erfindung ist somit mindestens eine elektrochemische Primärzelle, welche eine Anode, eine Kathode, einen Elektrolyten sowie mindestens einen Separator aufweist, wobei der Separator die Kathode und die Anode voneinander separiert, und die Kathode umfasst als Material Mangandioxid und optional einen Kohlenstoff enthaltenden Leitfähigkeitsvermittler, wobei die Anode als Anodenmaterial Silizium umfasst und, wobei das Silizium in Form von Silizium-Partikeln vorliegt und dabei die Silizium-Primärpartikel eine Partikelgröße zwischen 1 nm bis 3000 nm aufweisen, und die Primärpartikel optional im Wesentlichen amorph sind. Dabei ist es besonders bevorzugt wenn die Silizium-Partikel, und insbesondere die Silizium-Primärpartikel eine Kristallinität von kleiner gleich 20 %, insbesondere 12 % aufweisen, insbesondere eine Kristallinität kleiner gleich 2 % aufweisen. Silizium-Primärpartikel mit einer Kristallinität unter 12 %, vorzugsweise unter 2 % gelten als amorph. Vorzugsweise liegen die Silizium-Partikel in der Anode als Aggregate vor und optional ist der Gehalt an Lithium kleiner gleich 1 Gew.-% in Bezug auf den Siliziumgehalt der Anode von 100 Gew.-% der Primärzelle, wobei der Gehalt an Lithium bevorzugt im geladenen Zustand der Primärzelle kleiner gleich 0.1 Gew.-% beträgt.

Als im Wesentlichen amorph gilt ein Pulver, das röntgenamorph ist. Als röntgenamorph gilt vorzugsweise ein Pulver mit einer Kristallinität kleiner 20 %, bevorzugt kleiner 12 %, besonders bevorzugt kleiner gleich 2 %. Der Kristallinitätsgrad kann nach folgender Methode mittels XRPD ermittelt werden über die Formel % Kristallinität = (100×A)/(A + B -C) mit A = gesamte Peakfläche der Reflexe der kristallinen Bestandteile des Diffraktogramms; B = gesamte Fläche unterhalb der Peakfläche A; C = luftstreuend-, fluoreszierend- und gerätebedingte Untergrundfläche. Gesamte Peakfläche A mit Untergrund genau unterhalb der schmalen Reflexe der Si-Phase. Die Untergrundfläche C wurde anhand der XRD-Diagramme des Si-Referenzstandards NIST 640 (Si-Standard = 100 % Kristallinität) ermittelt. Fläche B entspricht einem eingelegten Untergrundverlauf sowie dem konstanten Untergrund C. Berechnung (HighScore Plus Software). Si-Standard (Standard Reference Material 640d for X-Ray Metrology, David R. Black, Donald Windover, Albert Henins, David Gil, James Filliben and James P. Cline; National Institute of Standards and Technology, Gaithersburg, MD, 20899). In röntgenamorphen Pulvern gibt es im XRPD keine scharfen, sondern nur wenige diffuse Interferenzen bei kleinen Beugungswinkeln. Stoffe mit einem derartigen Röntgenbeugungsdiagramm bezeichnet man als *röntgenamorph.* Kristallin: Kristall ist ein anisotroper, homogener Körper, der eine dreidimensional periodische Anordnung der Bausteine besitzt und ein XRPD mit klar definierten auflösbaren Reflexen besitzt.

Gleichfalls Gegenstand der Erfindung sind Silizium-Anoden umfassend Formkörper aus Siliziumpartikeln, die umfassen Silizium-Primärpartikel, Agglomerate aus Silizium-Primärpartikeln, Aggregate aus Silizium-Primärpartikeln und/oder Gemische davon umfasst, wobei insbesondere die Agglomerate und/oder Aggregate eine Größe von 10 nm bis 200 µm (Mikrometer) aufweisen. Bevorzugt sind Agglomerate und/oder Aggregate im Bereich von 100 nm bis 30 Mikrometer, insbesondere von 200 nm bis 5 Mikrometer, bevorzugt von 300 nm bis 1,5 Mikrometer und/oder von 400 nm bis 1 Mikrometer. Zugleich können die Silizium-Primärpartikel eine Partikelgrößenverteilung von 1 nm bis 15 nm, insbesondere von 50 bis 300 nm oder von 100 nm bis 300 nm aufweisen.

Entsprechend zwei alternativen besonders bevorzugten Ausführungsformen umfasst die Kathode der Primärzelle a) als Material Mangandioxid als Kathodenmaterial, oder b) die Kathode der Primärzelle ist eine Luftkathode und die Kathode umfasst Manganoxid, insbesondere ein Manganoxid, das kein Mangandioxid ist und optional Mangandioxid, Platin, Platin-Basis, Nickel-Kobalt-Cyanide oder Silber als Katalysator im Kathodenmaterial.

Nickel-Kobalt-Cyanide stehen beispielhaft für die Klasse von Nichtedelmetallkatalysatoren mit hervorragender Elektroaktivität für die Sauerstoffreduktionsreaktion im neutralen Elektrolyten. Die Zubereitung der Ni/Co-dotierten C-N-Hohl-Nanoröhren-Verbundkatalysatoren (C-N, Co/C-N, Ni/C-N und Ni-Co/C-N) erfolgt durch eine einfache Pyrolyse des Ni/Co-Salz~Dicyandiamid~Glucose~Gemenges. Eine entsprechende Silizium-Luft-Batterie wurde in einem neutralen Medium unter Verwendung der vorbereiteten Probe als Katalysator für die Luftelektrode montiert und zeigte eine hervorragende Entladungsleistung und Stabilität.

Die Kathode umfasst vorzugsweise als Material, d.h. als Kathodenmaterial oder als Katalysator im Kathodenmaterial zur Beschleunigung der Löslichkeit von Sauerstoff, Mangandioxid. Ein bevorzugtes Kathodenmaterial für eine Kathode in einer Primärzelle mit Luftkathode umfasst vorzugsweise Manganoxid, und optional Manganoxid, sowie Silber als Katalysator. Ein besonders bevorzugtes Kathodenmaterial, insbesondere für eine Primärzelle mit Luftkathode, weist eine hydrophobe Kathode auf, deren Kathodenmaterial eine Mischung aus Mangan(di)oxid, d.h. Manganoxid und/oder Mangandioxid, vorzugsweise einer durchschnittlichen Partikelgröße von kleiner gleich 10 µm (Mikrometer), insbesondere elektrolytisches Gamma-Mangandioxid, einen Leitfähigkeitsvermittler und einen polymeren halogenierten Kohlenwasserstoff, insbesondere einen polymeren fluorierten Kohlenwasserstoff, umfasst, insbesondere einen Polytetrafluorethylen. Die Mischung kann in Platten gepresst, getrocknet werden. Dabei wird vorzugsweise in der Primärzelle auf die der Luft ausgesetzten Kathodenseite ein mikroporöser, hydrophober Film, beispielsweise aus einem polymeren fluorierten Kohlenwasserstoff, aufgebracht.

Ein besonders bevorzugtes Kathodenmaterial der Kathode, insbesondere für eine Kathode in einem hermetisch geschlossenen Batteriegehäuse, umfasst zu 75 bis 85 Gew.-% Mangandioxid und zu 15 bis 25 Gew.-% einen Kohlenstoff enthaltenden Leitfähigkeitsvermittler, wobei die Gesamtzusammensetzung des Kathodenmaterials 100 Gew.-% beträgt. Das Kathodenmaterial umfasst vorzugsweise noch keinen Elektrolyten oder ist trockenes Kathodenmaterial.

Der Kohlenstoff enthaltende Leitfähigkeitsvermittler umfasst vorzugsweise Kohlenstoff enthaltende Partikel, besonders bevorzugt Graphen enthaltende Partikel. Die Kohlenstoffpartikel weisen vorzugsweise eine Partikelgrößenverteilung im Bereich von 0,1 nm bis 5 Mikrometer, bevorzugt von 5 nm bis 5 Mikrometer auf. Dabei ist es weiter bevorzugt, wenn die Kohlenstoffpartikel eine Partikelgröße im Bereich von 5 nm bis 300 nm, insbesondere von 10 nm bis 150 nm, besonders bevorzugt von 20 bis 100 nm aufweisen und optional als Agglomerate einer Größe von 100 nm bis 3 Mikrometer, vorzugsweise einer Größe von 300 nm bis 2 Mikrometer vorliegen.

Zur Herstellung einer Anode oder Kathode werden jeweils ein Leitfähigkeitsvermittler sowie Silizium-Partikel zur Herstellung der Anode und Mangandioxid zur Herstellung der Kathode und optional ein Bindemittel, wie ein polymerer fluorierter Kohlenwasserstoff, gemischt und optional getrocknet. Vorzugsweise wird eine homogene Partikelgröße von kleiner gleich 10 Mikrometer bis 5 nm eingestellt und die Mischung zu einer Anode(nplatte) oder Kathode(nplatte) verpresst.

Nach einer weiteren Alternative weist die Primärzelle an der Luftkathode einen Lufteinlass auf, der eine Gas durchlässige Membran sein kann. Bevorzugt ist eine Membran aus einem inerten Polymer, bevorzugt aus einem Polyfluorpolyethylen, Polyfluorpolypropylen oder Co-Polymeren davon. Der Aufbau der Luftkathode ist in der Regel eine Sandwichbauweise umfassend eine Gas durchlässige Membran, ein metallisches Netz zur Stromleitung und mindestens einen Katalysator, insbesondere einen porösen Katalysator. Die Gas durchlässige Membran ist vorzugsweise für Kohlendioxid undurchlässig und für Sauerstoff und optional Stickstoff durchlässig.

Dabei ist es weiter besonders bevorzugt, wenn die Anode, insbesondere das Anodenmaterial, insbesondere im geladenen Zustand der Primärzelle, kein Lithium umfasst, vorzugsweise keine Lithium-Ionen, im Konzentrationsbereich von größer gleich 10000 Gew-ppm, größer gleich 100 Gew.-ppm aufweist. Besonders bevorzugt weist das Anodenmaterial kleiner 10 Gew.-ppm LithiumAtome auf. Vorzugsweise weist das Anodenmaterial kleiner 10²¹ Lithium-Atome/cm³ Silizium-Partikel auf. Des Weiteren ist es bevorzugt, wenn im Elektrolyten die Konzentration an Lithium, insbesondere Lithium-Ionen, kleiner gleich 10000 Gew.-ppm, insbesondere kleiner gleich 1000 Gew.-ppm, bevorzugt kleiner gleich 100 Gew.-ppm beträgt.

Dabei ist es besonders bevorzugt, wenn die Silizium-Partikel, insbesondere die Silizium-Primärpartikel, im Wesentlichen amorph (röntgenamorph) sind, da auf diese Weise sichergestellt wird, dass in dem Elektrolyten eine gleichmäßige Auflösung der Silizium-Partikel gewährleistet ist. Bei im Wesentlichen kristallinem Silizium würde die Auflösung im Elektrolyten anisotrop erfolgen. Amorphes Silizium wird isotrop aufgelöst, so dass amorphes Silizium eine höhere Energiedichte liefern kann. Beispielsweise ist in alkalischen Ätzmitteln die Ätzrate für die (111)-Richtungen eines Siliziumkristalls ungefähr zwei Größenordnungen kleiner als die jeder anderen Richtung. Die (100)-orientierten Flächen des Siliziumkristalls werden anderthalb mal so schnell geätzt wie die (110)-orientierten Flächen. Gleichfalls können dotierte, amorphe Silizium-Partikel eingesetzt werden. Ist die Dotierung von p-Typ Silizium-Partikeln größer als > 10¹⁹ je cm³, wird die Ätzrate herabgesetzt, da gilt, je höher die Dotierrate desto geringer die Ätzrate. Insofern ist über die Dotierung in amorphen Silizium-Partikeln die Leistungsdichte auch über die Ätzrate einstellbar.

Unter amorphen Silizium-Primärpartikeln werden Silizium-Primärpartikel, in der Regel in Form eines Pulvers oder in einer festen Zusammensetzung verstanden, die (Silizium-Primärpartikel) röntgenamorph vorliegen und optional partikulärdispers in eine Hilfsstoffmatrix z.B. Ruß eingebettet sein können. Dabei bedeutet Röntgenamorph, dass dem Röntgensignal entsprechend den Haupt-Peaks: 28.5° (111) 47.4°(220) 56.0° (311) 69.4° (400) maximal weniger als 10% der Signalamplituden bezogen auf die fcc Structure des Siliziums (JCPDS card: 00-027-1402) erreichen.

Erfindungsgemäßes Anodenmaterial umfasst keine Silicide. Unter Siliciden werden intermetallische Verbindungen mit einem stöchiometrischen Anteil an mindestens einem zweiten Metall verstanden. Silicide weisen eine homogene chemische Verbindung aus zwei oder mehr Metallen mit Gitterstrukturen, die sich von denen der konstituierenden Metalle unterscheiden, auf. Des Weiteren weist das Anodenmaterial insgesamt keine klassische Legierung aus mindestens zwei Elementen auf, die gemeinsam das metalltypische Merkmal des kristallinen Aufbaus mit Metallbindung aufweisen, da die Silizium-Partikel vorzugsweise im Wesentlichen amorph (röntgenamorph) sind.

Die erfindungsgemäße elektrochemische Primärzelle ist keine Lithium-Ionen Sekundär-Batterie. Deshalb umfasst das Anodenmaterial keine Lithium-Interkalationsverbindung. Erfindungsgemäß umfasst das Kathodenmaterial kein Lithium-Metalloxid.

Die Silizium-Partikel können auf atomarer Ebene eine Legierung von Silizium mit mindestens einem Element der 13. oder 15 Hauptgruppe aufweisen, wobei das mindestens eine Element der 13. oder 15. Hauptgruppe mit größer gleich 10²¹ Atomen/cm³ ausgewählt aus mindestens einem Elektronendonator und Elektronenakzeptor vorliegt. Dabei liegt die Legierung von Silizium auf atomarer Ebene mit mindestens einem Element der 13. oder 15. Hauptgruppe als eine amorphe Phase vor.

Entsprechend einer Ausführungsform weisen die Silizium-Primärpartikel im Wesentlichen eine Partikelgröße von 1 bis 500 nm auf, insbesondere von 5 bis 20 nm, vorzugsweise von 5 bis 15 nm, oder in ebenso bevorzugten Alternativen weisen die Silizium-Primärpartikel Partikelgrößen von 20 bis 200 nm oder von 70 bis 350 nm, insbesondere von 100 bis 300 nm auf.

Ferner ist es bevorzugt, wenn die Silizium-Primärpartikel in Form von Agglomeraten und/oder Aggregaten aus den Primärpartikeln vorliegen, wobei die Agglomerate und/oder Aggregate eine Partikelgröße von 100 nm bis 200 µm aufweisen, insbesondere von 100 nm bis 20000 nm, bevorzugt von 150 bis 5000 nm oder von 400 bis 2000 nm. Die vorgenannten Anordnungen können auch als Nanodrähte oder Nanonetzwerk angesehen werden. In einer weiteren Alternative liegen die Silizium-Partikel im Wesentlichen in Form von Agglomeraten von Silizium Primärpartikeln und/oder Aggregaten von Silizium-Primärpartikeln oder Gemischen dieser vor, wobei die Agglomerate und/oder Aggregate eine Größe von 100 bis 30000 nm aufweisen, insbesondere von 100 bis 5000 nm, vorzugsweise von 100 nm bis 3000 nm, weiter bevorzugt sind 150 bis 1000 nm, 400 bis 1000 nm oder 200 bis 2000 nm.

Die erfindungsgemäßen Silizium-Primärpartikel weisen vorzugsweise eine Oberfläche von 1 m²/g bis 800 m²/g auf, insbesondere von 10 - 200 m²/g, vorzugsweise mit einer Primärpartikelgröße von etwa 10 nm im Mittel mit plus/minus 9 nm. Des Weiteren beträgt vorzugsweise die Oberfläche der Agglomerate und/oder Aggregate von 10 bis 80 m²/g.

Die Kathode und/oder die Anode weisen vorzugsweise eine Porosität auf, die bestimmt wird über Dichtemessung. Vorzugsweise beträgt die Porosität der Kathode und/oder der Anode von 18 bis 28 Vol.-% in Bezug auf das Gesamtvolumen der Kathode von 100 Vol.-%, bevorzugt von 24 bis 28 Vol.-%, besonders bevorzugt von 25 Vol.-% bis 27 Vol.-%. Die Porosität ist der Zwischenraum in der Anode und/oder der Kathode, der für den fluiden Elektrolyten verfügbar ist. Die Porosität wird ausgedrückt als prozentuales Volumen des geometrischen Gesamtvolumens der Kathode oder der Anode. Somit können die über die Porosität gebildeten Zwischenräume im Betrieb teilweise und nach und nach vollständig mit Elektrolyt gefüllt sein.

Gleichfalls Gegenstand der Erfindung ist eine mehrzellige Batterie wobei die Batterie mindestens zwei bis 15.000, insbesondere 3 bis 500, bevorzugt 4 bis 300, mit einander verbundene Primärzellen umfasst, vorzugsweise sind von den zwei bis 15.000 mit einander verbundenen Primärzellen 4 bis 100 in Serie, die weiteren entsprechend parallel geschaltet. Die Batterie wird definiert nach der DIN-Norm 40729.

Ebenso ist Gegenstand der Erfindung die Verwendung von Silizium als Anodenmaterial in Form von Formkörpern von Silizium-Partikeln, insbesondere in Primärzellen, die als Silizium-Primärpartikel mit einer Partikelgröße zwischen 1 nm bis 3000 nm vorliegen und, insbesondere bilden die Silizium-Primärpartikel Agglomerate und/oder Aggregate oder Mischungen dieser, wobei die Silizium-Partikel, insbesondere die Silizium-Primärpartikel, optional im Wesentlichen amorph sind und das Anodenmaterial im geladenen Zustand kein Lithium umfasst. Vorzugsweise umfasst das Anodenmaterial im geladenen Zustand keine Lithium-Ionen im Konzentrationsbereich von größer gleich 10000 Gew.-ppm, bevorzugt von größer gleich 1000 Gew.-ppm, besonders bevorzugt von größer gleich 100 Gew.-ppm. Vorzugsweise umfasst das Anodenmaterial weniger als 10²⁰ LithiumAtome/cm³.

Des Weiteren weist der Elektrolyt vorzugsweise keine Lithium-Ionen mit einer Konzentration im Elektrolyten im Bereich oberhalb von 10000 Gew.-ppm auf, insbesondere oberhalb von 1000 Gew.-ppm, bevorzugt weniger als 100 Gew.-ppm auf.

Die Gasdiffusionselektrode kann eine Membran und/oder ein Stahlgitter, vorzugsweise aus einem plattierten Stahldraht bspw. Nickelplattiert sein. Gleichfalls kann eine Gasdiffusionselektrode umfassend eine PTFE-Schicht, wie bspw. von der Firma Gaskatel, eingesetzt werden. Gasdiffusionselektroden können alternativ Membranen aus den folgenden Materialien umfassen Ethylcellulose, Polyphenylenoxid, Polymethylpenten, modifziertes Poylcarbbonat, Cellulosetriacetat, Celluloseacetat, Polydimethylsiloxan (PDMS), PSDM mit PC, Polysulfon mit PDMS oder Polyimid.

Nachfolgend wird die Erfindung anhand von Beispielen detailliert erläutert, ohne die Erfindung auf diese Beispiele zu beschränken.

### Ausführungsbeispiele:

### Herstellung Formkörper, hier gesinterter Pressling:

Masse: 1,0 g, Max. Druck: 180 bar, Max. Temperatur: 750 °C, Haltezeit: 180 s,

Ofen: Spark-Plasma Sinterofen DSP 507, Firma Fritsch, Die Presslinge der Ausführungsbeispiele wurden alle mit den gleichen Parametern gesintert.

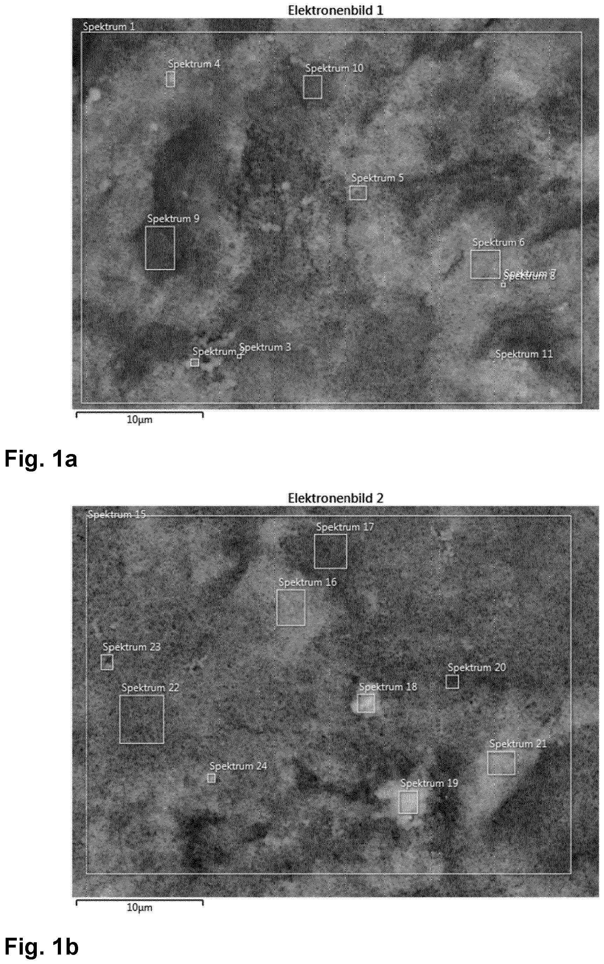

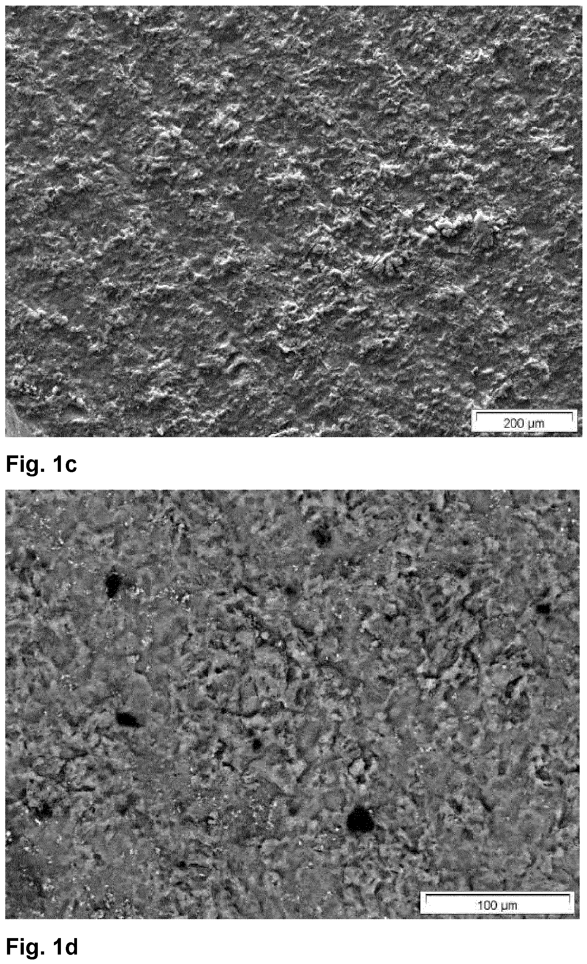

Die **Figuren 1a** und **1b** stellen dar, ein Elektronenbild der Vorderseite und Rückseite (ohne Beschichtung) einer Silizium-Anode (P21), die im Mittel ~ 2 Gew-% n und p dotiert ist. Die nachfolgenden mittels EDX analysierten Bereiche der Vorderseite des Formkörpers der Silizium-Anode sind in der Abbildung teilweise nummeriert dargestellt.

**Tabelle 1a: Analysierte Elemente (B, C, N, O, Si, Sb) der Vorderseite einer Silizium-Anode gemäße Figur 1a.**

| Analysierte Elemente | Massen % des Spektrums Nr. | | | | | | | | | | |
|---|---|---|---|---|---|---|---|---|---|---|---|
| | **Nr. 1** | **Nr. 2** | **Nr. 3** | **Nr. 4** | **Nr. 5** | **Nr. 6** | **Nr. 7** | **Nr. 8** | **Nr. 9** | **Nr. 10** | **Nr. 11** |
| **B** | 5,62 | 2,51 | 1,30 | 3,63 | 0,00 | 6,70 | 1,19 | 6,39 | 1,21 | 5,78 | 5,67 |
| **C** | 14,41 | 10,81 | 12,71 | 20,03 | 11,99 | 15,51 | 14,26 | 12,68 | 11,95 | 10,13 | 10,35 |
| **N** | 2,07 | 22,95 | 1,78 | 1,31 | 7,65 | 0,32 | 0,38 | 0,39 | 3,86 | 0,71 | 0,46 |
| **O** | 3,37 | 2,84 | 4,33 | 5,97 | 2,57 | 3,97 | 4,21 | 3,26 | 3,85 | 2,36 | 3,78 |
| **Si** | 73,52 | 60,39 | 78,87 | 67,48 | 76,67 | 72,46 | 78,60 | 76,10 | 78,21 | 79,90 | 78,56 |
| **Sb** | 1,01 | 0,50 | 1,00 | 1,58 | 1,12 | 1,03 | 1,37 | 1,19 | 0,92 | 1,12 | 1,19 |
| Gesamt | 100 | 100 | 100 | 100 | 100 | 100 | 100 | 100 | 100 | 100 | 100 |

**Tabelle 1b: Analysierte Elemente (B, C, N, O, Si, Sb) der Rückseite einer Silizium-Anode gemäß Figur 1b.**

| Analysierte Elemente | Massen % des Spektrums Nr. | | | | | | | | | |
|---|---|---|---|---|---|---|---|---|---|---|
| | **Nr. 15** | **Nr. 16** | **Nr. 17** | **Nr. 18** | **Nr. 19** | **Nr. 20** | **Nr. 21** | **Nr. 22** | **Nr. 23** | **Nr. 24** |
| **B** | 4,70 | 1,32 | 0,00 | 4,58 | 2,91 | 0,00 | 3,11 | 1,40 | 4,77 | 1,43 |
| **C** | 13,28 | 15,43 | 11,20 | 18,36 | 23,90 | 11,37 | 16,55 | 10,44 | 9,51 | 11,85 |
| **N** | 1,61 | 1,04 | 0,70 | 1,30 | 2,29 | 1,98 | 1,40 | 1,23 | 7,79 | 5,43 |
| **O** | 2,98 | 3,66 | 2,90 | 3,41 | 3,10 | 3,09 | 4,12 | 2,81 | 2,20 | 3,09 |
| **Si** | 76,05 | 77,32 | 83,82 | 70,95 | 66,27 | 82,23 | 73,57 | 82,85 | 74,74 | 77,20 |
| **Sb** | 1,36 | 1,24 | 1,38 | 1,40 | 1,52 | 1,33 | 1,26 | 1,28 | 0,99 | 1,00 |
| Gesamt | 100 | 100 | 100 | 100 | 100 | 100 | 100 | 100 | 100 | 100 |

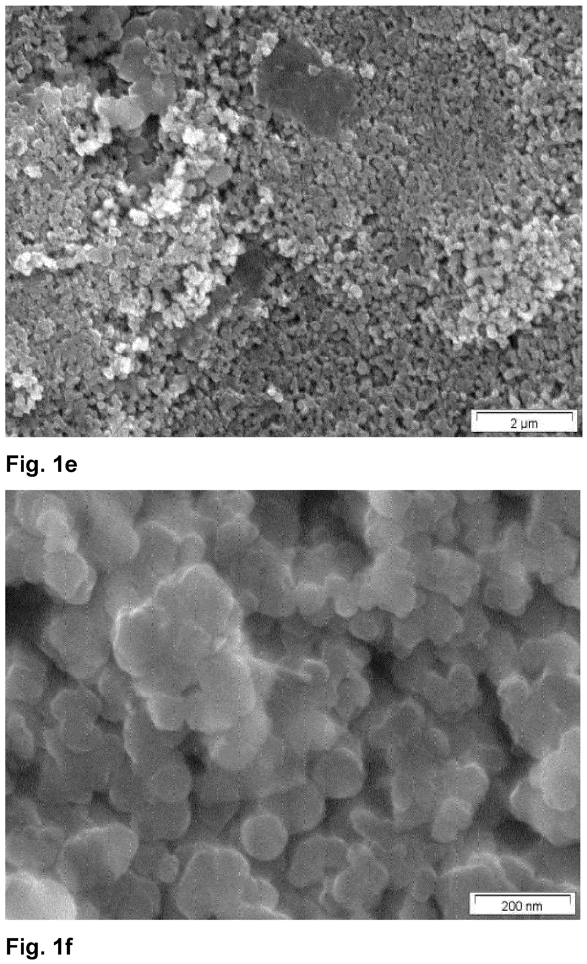

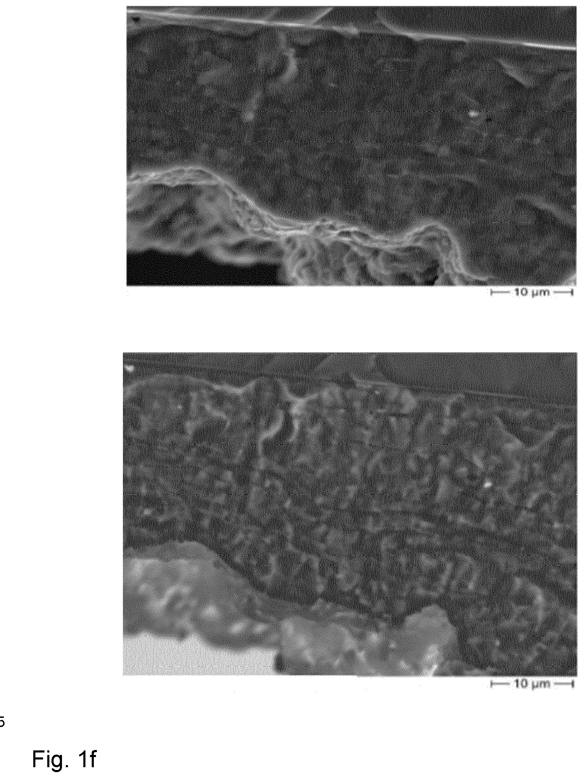

Die **Figuren 1c** (200 Mikrometer), **1d** (100 Mikrometer), **1e** (2 Mikrometer) bis **1f** (200 Nanometer) zeigen REM-Aufnahmen (JEOL JSM 7600F, Acc. 20 kV, Detektor: SE(I), der äußeren Oberfläche des Formkörpers (hier: Pressling) ohne Beschichtung sowie in **Figuren 1e** und **1f** der äußeren Oberfläche und teilweise der inneren Oberfläche des Formkörpers zur Herstellung der Silizium-Anode (mit Beschichtung). In den **Figuren 1e** und **f** sind die miteinander an Kontaktpunkten miteinander verbunden einzelnen Siliziumpartikel, die im Nanometerbereich die äußere Oberfläche und innere Oberfläche des Formkörpers bilden gut zu erkennen. Die Kontaktpunkte zwischen den Siliziumpartikeln werden gebildet aus dem Material der hier angeschmolzenen Siliziumpartikel. Eine Vielzahl an Siliziumpartikeln sind daher integral an den Kontaktpunkten miteinander verbunden, hier verschmolzen.

**Figur 1g** zeigt eine Siliziumschicht, die über eine alternative, bevorzugte Route hergestellt wurde. Die Silizium-Anodenherstellung kann dabei preiswert durch Prozessierung von Siliziumpartikeln, die einem Wasserstoff-Plasmastrahl beigemischt werden erfolgen. Bei diesem an das sogenannte Plasmaspritzen angelehnten Prozess werden Siliziumpartikel vorzugsweise aus der Aufarbeitung von Sägesuspensionen von Wafer-Sägeprozessen, so aufgeheizt, dass das Silizium aufschmilzt und inclusive seiner Verunreinigungen auf einem elektrisch leitenden Substrat (z.B. Metallnetz,Grafitfasernetz usw.) abgeschieden werden kann. Beispielhaft wurden so Siliziumschichten mit einer Dicke von ca. 20 Mikrometer hergestellt, die sich als Anode für eine Silizium-Primärbatterie nutzen lassen. So erzeugte Siliziumschichten können optional in einem Zonenschmelzverfahren rekristallisiert werden, um eine gute Morphologie zu erreichen. Durch die Segregation der Fremdstoffe beim Zonenschmelzverfahren können aus sehr kostengünstigen Sägestäuben oder Recyclingsilizium (polykristalline) Siliziumschichten mit höherer Leitfähigkeit erreicht werden, die sich dazu durch eine hohe "innere Oberfläche" auszeichnen.

Die damit aufgebaute Silizium-Primärzelle erreicht Performancewerte analog zu Zellen mit gesinterten Anoden. Besonders vorteilhaft lassen sich so Anoden für Hochleistungszellen in einem Rolle-zu-Rolle Prozess auf z.B. Kohlefasergewebe oder Metallnetzen herstellen.

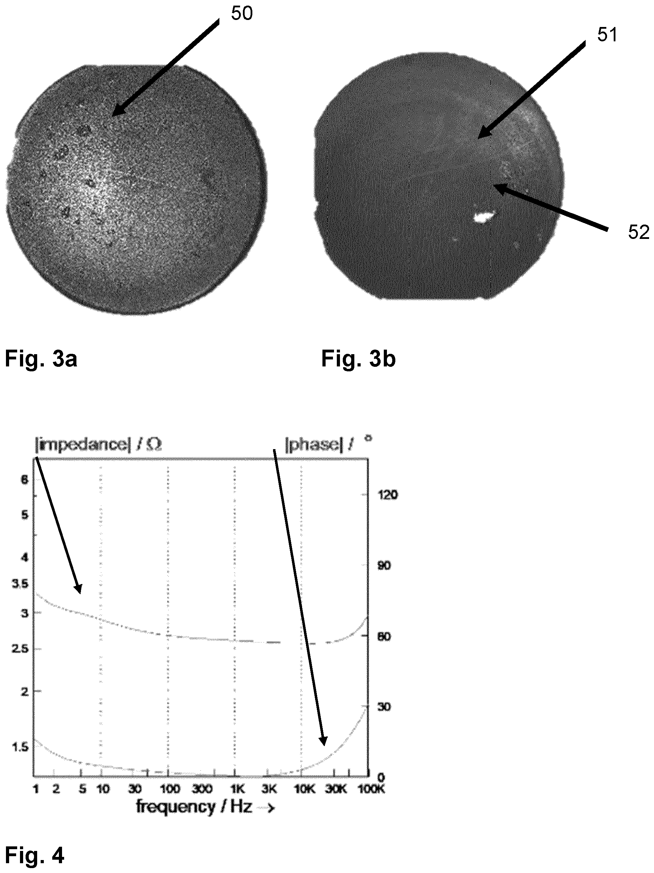

Die Kontakt-Beschichtung der Formkörper erfolgte mit einer Goldbeschichtung als Kontaktierung. Die **Figur 3a** zeigen die Vorderseite (50) des Formkörpers der Anode und **Figur 3b** die mit Gold **(52)** beschichtete Rückseite **(51)** des Formkörpers der Silizium-Anode. Dazu wurde Gold als Beschichtung auf die Rückseite eines Formkörpers auf gesputtert. Ein Pressling bzw. Formkörper wurde mit acht Lagen Gold (Versuch Nr. 4, Tabelle 2) gesputtert.

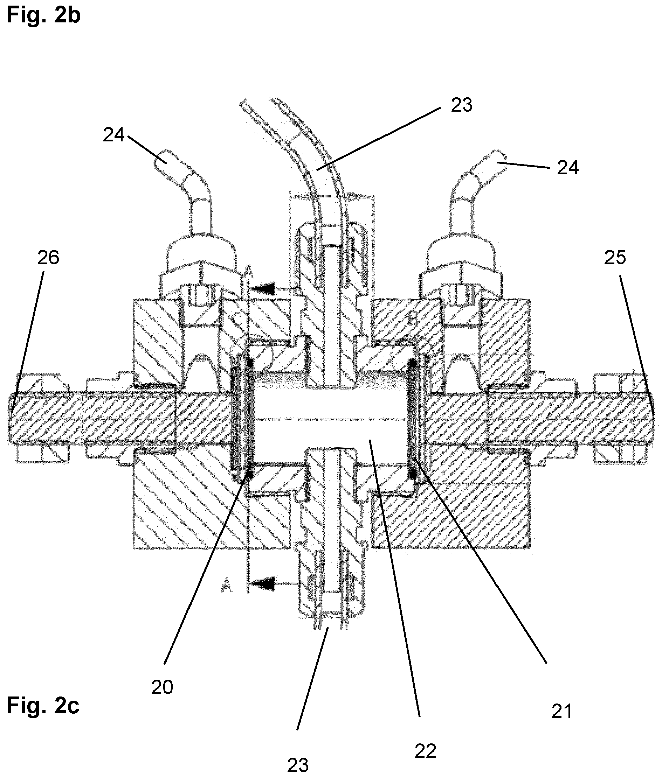

Die so hergestellten Silizium-Anoden wurden in der Primärzelle der **Figur 2c** in mit einem alkalischen, wässrigen Elektrolyten (gerührt) unter den nachfolgend genannten Bedingungen vermessen (Elektrolyt: KOH 3 mol/L, 1 Gew.-% PEG 4000, Formkörper Nr. 1 bis 6, (Beschichtung: Gold, Nr. 4 mit 8 Lagen Gold), Elektrodenabstand: 2 cm, Widerstand über die gesamte Zelle 2,6 Ohm [Ω].

**Tabelle 2: Widerstandsmessung**

| Versuch | Material Dotierung Si dotiert mit Bor mit Goldbeschichtung, Abweichung angegeben | Widerstand der Silizium-Anode [Ω] geschliffen |
|---|---|---|
| 1 | + | 2,4 |
| 2 | + | 3,9 |
| 3 | + | 1,1 |
| 4 | 8 Lagen Blattgold | 0,4 |
| 5 | + | 0,7 |
| 6 | + | 2,1 * |

| | | |
|---|---|---|
| * Gas (Druckluft), +: 4 Lagen Blattgold | | |

Die Schwankungen im (Innen-)Widerstand der Siliziumanode nach Tabelle 2 resultiert aus unterschiedlich gutem Kontakt zwischen Silizium-Anode und dem Anodenkontakt mit Kabelanschluss. Es wurde festgestellt, dass sowohl oxidierte Partikel auf der Oberfläche als auch Inhomogenitäten auf der Oberfläche wie sie in Figur 1a bis Figur 1f zu erkenne sind zu schwankenden Widerstandwerten führen können. Der Formkörper des Versuchs Nr. 4 mit acht Lagen Gold als Beschichtung zur Kontaktierung wurde unter folgenden Bedingungen vermessen und wies einen Widerstand von 0,4 Ohm auf (Elektrolyt: KOH 3 mol/L, 1 Gew.-% PEG 4000, Elektrolyt wird gerührt (Magnetfisch mit Magnetrührplatte), Formkörper: Beschichtung: Gold, Elektrodenabstand: 2 cm, Gas an Kathode: Druckluft, Widerstand über die gesamte Zelle 2,6 Ohm [Ω], Primärzelle gemäß **Figur 2c****.**

Das Impedanzspektrum **(****Figur 4****)** der Versuchszelle zeigt einen Widerstand über die gesamte Zelle von ca. 2,6 Ohm über einen Frequenzbereich von 10 Hz bis 100 KHz. Der Formkörper des Versuchs Nr. 6 wurde unter folgenden Bedingungen vermessen und wies einen Widerstand von 2,1 Ohm auf (Elektrolyt: KOH 3 mol/L, 1 Gew.-% PEG 4000, Formkörper: Beschichtung: Gold, Elektrodenabstand: 2 cm, Gas an Kathode: Druckluft, Widerstand über die gesamte Zelle 2,6 Ohm [Ω], Primärzelle gemäß **Figur 2c****.**

Diese Silizium-Anode wurde über 1500 Sekunden in Elektrolyt vermessen und unter verschiedenen Last-Bedingungen die Spannung und Stromstärke ermittelt. Zu Beginn liegt die Leerlaufspannung (OCV: Open Circuit Voltage) ohne Rühren des Elektrolyten bei 0,8 V, der vollständige Potentialaufbau innerhalb von ~ 200 Sekunden und erreicht dann eine Spannung von nahezu 1,38 Volt, die mit Rühren des Elektrolyten erhältlich wird. Danach erfolgt für ~ 400 Sekunden bei U=800mV eine Leistungsentnahme (ohne Rühren), wobei ein konstanter Stromfluss von ca. 81 mA erhalten wird. Nach insgesamt 600 Sekunden Betrieb erfolgt ein Lastwechsel mit einer Leistungsentnahme bei U=600 mV (ohne Rühren) kann ein konstanter Stromfluss von 120 mA erhalten über weitere 600 Sekunden werden. Das Silizium vermittelt in diesem spezifischen Fallbeispiel Elektronen mit einem gemittelten Leistungspotential von 0,6V*0,12A=0,072VA=0,072Watt, stellt also einen Elektronen liefernden Kraftstoff dar. Über diese Versuchsdauer konnten keine abgelösten Siliziumpartikel der Silizium-Anode im Elektrolyten nachgewiesen werden.

Demgegenüber löst sich die gleiche Menge an pulverförmigem Silizium (Material A und Material B gemäß Tabelle1), gehaltert zwischen zwei Membranen mit gleichem Elektrodenquerschnitt nach etwa 1100 (Material A) bzw. 1000 Sekunden (Material B) auf. Die größere Oberfläche der Silizium-Partikel führt zu einem höheren Strom und damit einem schnelleren Verbrauch. Mit Silizium-PulverMaterial C und ~D gemäß Tabelle 1 konnte auch noch nach 2000 Betriebssekunden Leistung aus der Zelle entnommen werden.

Mit einem Silizium-Wafer konnte mit gleichem Elektrodenquerschnitt nur deutlich geringere Ströme bei eingeprägter Spannung von 0,8Volt erzielt werden. Abhängig von der Stärke (Dicke) des Wafers ist die mechanische Stabilität des Wafer-Silizium zwischen Siliziumpulver und gesinterte Tablette einzuordnen. Die sich einstellende spezifische Leistung der Zelle mit Wafer-Silizium ist aufgrund der geringeren Stromstärke am geringsten. Ursächlich dafür ist die geringere Oberfläche des Wafersiliziums.

Nachfolgend sind verschiedene Konstruktionsmöglichkeiten für den Aufbau einer Silizium-Primärzelle in denen die Silizium-Anode eingesetzt werden kann dargestellt. Spezifische Messungen mit den Silizium-Anoden wurden mit der Primärzelle der **Figur 2c** durchgeführt.

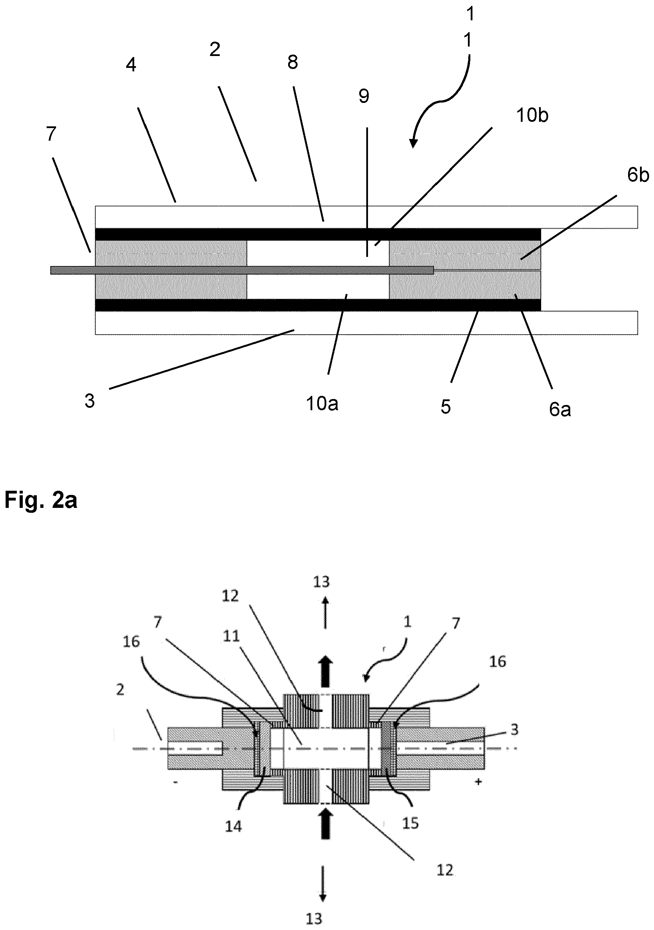

Eine Zelle einer Silizium-Primärbatterie **1** wird anhand **Fig. 2a** näher erläutert: Auf eine isolierende Trägerplatte **3** (quadratische Polymerplatte 4 cm auf 4 cm) wird eine Komposit-Elektrode **5** bestehend aus einem passenden Kontaktblech aus Kupfer oder Edelstahl als Ableitelektrode, einem 4 cm mal 4 cm Nickelnetz, vorzugsweise vergoldet, als Kontaktvermittler zwischen Ableitelektrode und chemisch-inerten Elektrodenträger sowie ein chemisch-inerter Elektrodenträger (vorzugsweise ein Graphit-Polymer-Compound) aufgebracht. Darauf liegt eine 4 cm mal 4 cm Silikonplatte **6a** mit ca. 1 mm Höhe die mit einer zentrischen Aussparung **10a** (Loch) mit ca. 2,5 cm Durchmesser versehen ist. In diese Aussparung wird vorzugsweise Anodenmaterial **9** (Siliziumgranulat oder Pasten-Gemisch aus Siliziumpulver, Leitruß, Wasser, Benetzungsmittel und Elektrolyt) einfügt oder -gestrichen. Hierauf wird ein Separator 7 (z.B. Fließpapier) gelegt, der mit einer Fahne über die 4 cm mal 4 cm große Fläche hinausragt. Auf diesem liegt eine weitere 4 cm mal 4 cm Silikonplatte **6b** mit ca. 1 mm Höhe die mit einer zentrischen Aussparung **10b** (Loch) mit ca. 2,5 cm Durchmesser versehen ist. Darin wird nun das Kathodenmaterial **8** eingestrichen (Pasten-Gemisch aus Mangandioxidpulver, Leitruß, Wasser, Katalysator, Benetzungsmittel und Elektrolyt). Darauf liegt nun die eine weitere Komposit-Elektrode **4** bestehend aus chemisch-inertem Elektrodenträger (vorzugsweise ein Grafit-Polymer-Compound), 4 cm mal 4 cm Nickelnetz, vorzugsweise vergoldet, als Kontaktvermittler zwischen Ableitelektrode und chemisch-inertem Elektrodenträger und ein passendes Kontaktblech aus Kupfer oder Edelstahl als Ableitelektrode oben aufliegend. Darauf liegt eine weiter isolierende Trägerplatte **2** (quadratische Polymerplatte 4 cm auf 4 cm). Dieser sogenannte Sandwichaufbau einer Silizium-Primärzelle **1** kann in einer Schraubstock-Anordnung miteinander verspannt werden.

Der prinzipielle Aufbau einer bevorzugten Variante der Primärzelle **1** ist in **Figur 2b** dargestellt. Die Primärzelle weist eine Anode **14** aus Silizium (und eine Luftkathode **15** auf. Die Anoden können gebildet sein aus Silizium-Wafer-Plättchen, Silizium-Granulat-Tablette, verdichteter Pulver-Granulat-Tablette etc. Zwischen Anode **14** und Kathode **15** ist ein Hohlraum **11** zur Aufnahme eines Elektrolyten von ca. 0,6 ml. Die effektive Elektrodenfläche für eine nicht poröse Anodenfläche beträgt ca. 0,44 cm² (Kreis mit Radius 0,375 cm). Mit der erfindungsgemäßen Silizium-Anoden kann somit eine deutlich größere Anodenfläche aufgrund der äußeren und inneren Oberfläche, die sich durch die Siliziumpartikel bereitgestellt werden.

**Fig. 2b** stellt eine Zellanordnung einer Primärzelle dar. Jeweils über eine Leitung **12** ist die Zuführung als auch die Abführung des Elektrolyten mit einem Reservoir **13** vorgesehen. **2** und **3** stellen Kontaktelektroden dar. Zwischen Kontaktelektrode **2** und Anode **14** ist ein Ableit-Kontakt-Stütz-Feder-Netz **16** das für einen stabilen, flächigen elektrischen Kontakt zwischen Kontaktelektrode **2** und Anode **14** bzw. zwischen Kontaktelektrode **3** und Kathode **15** sorgt. Bei Verwendung einer Luftkathode **15** ist die zugehörige Kontaktelektrode **3** als Hohlelektrode ausgeführt, damit Luft bzw. Sauerstoff an die Luftkathode gelangen kann. An der Kontaktelektrode 2 ist beispielhaft eine Bohrung dargestellt über die ein Kabel zur Stromableitung (Schraube mit Kabelöse) angeschlossen werden kann. Werden Anode und /oder Kathode mit Pasten befeuert, dann trennt die Anode bzw. die Kathode ein Separator. Die Kontaktelektroden **2** und **3** bestehen aus elektrisch leitfähigen Materialen bspw. Graphit-Polymer-Compounds. Diese sind in den Batteriekörper der aus isolierendem und korrosionsfestem Material z.B. PEEK oder Plexiglas besteht eingeschraubt bzw. eingelassen. Die Kontaktelektroden **2** und **3** drücken auf das Ableit-Kontakt-Stütz-Feder-Netz **16,** das wiederum auf die Anode **14** bzw. Kathode **15** drückt, welche wiederum vom Elektrolytkörper **12** mit den Hohlringen **7** einen Gegendruck erfahren. Das Ableit-Kontakt-Stütz-Feder-Netz **16** kompensiert die mechanischen Spannungen, die an der Silizium-Anode bzw. der (Luft-) Kathode auftreten. Das Reservoir **13** ist nicht dargestellt und kann ein zweiter Hohlraum in Form eines Behälters mit oder ohne Pumpe sein.

**Figur 2c** zeigt einen realen Aufbau der Versuchszelle: **20:** Anode in Form einer Scheibe umfassend Siliziumpartikel als Pulver in einem Separator bzw. als gesinterte Scheibe aus Siliziumpartikeln. Alternative kann eine Silizium-Kohlenstoffpaste als Anode in Form einer Scheibe eingesetzt werden, 21: Luftkathode, **22:** Elektrolytreservoir (20 ml, 6 cm² Anoden- und Kathodenfläche); **23:** Zu-/Ableitung Elektrolytflüssigkeit; **24:** Zu-/Ableitung Inertgas (Argon und/oder N₂); 25: Stromabnehmer Kathode, **26:** Stromabnehmer Anode.

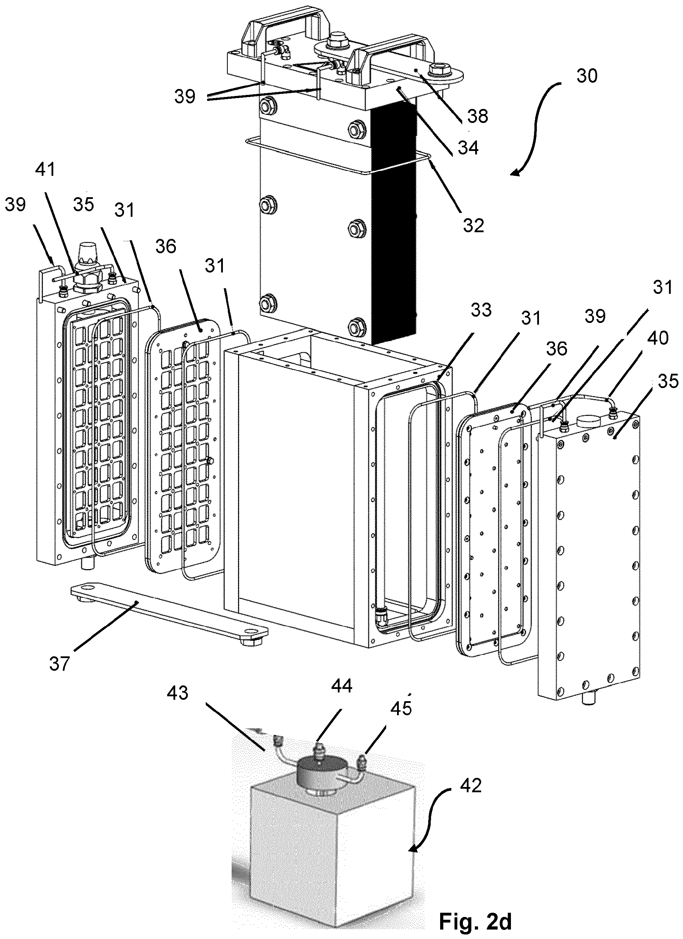

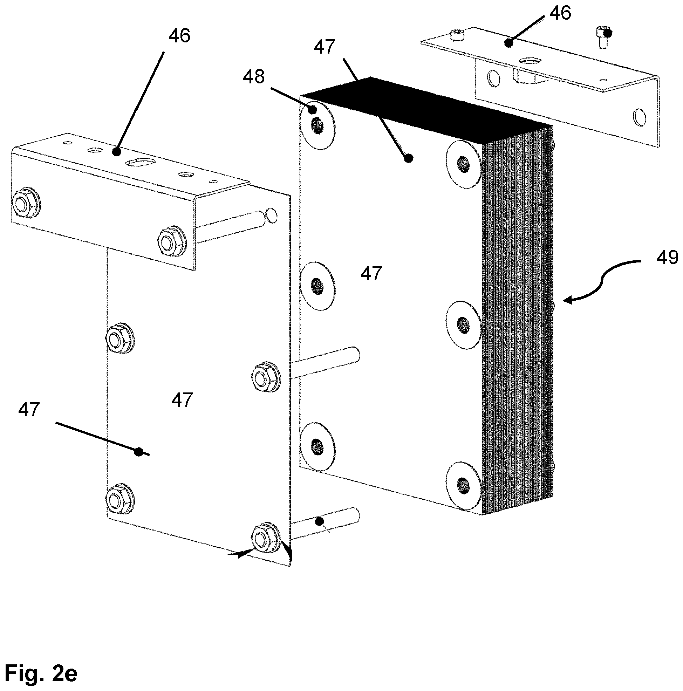

**Figur 2d** zeigt eine weitere Primärzelle **30,** bspw. für einen Batterie-Stack, in Explosionsansicht. Dargestellt sind: Dichtung **31,** insbesondere Silicondichtung oder textile Dichtschnur, Dichtung **32** Anode, insbesondere Silicondichtung oder textile Dichtschnur, **33** Gehäuse, insbesondere zur Aufnahme der Anode, **34** Gehäuseteil der Silizium-Anode, **35** Kathode, hier Luftkathode, **36** Membran, insbesondere mit Rahmen, **37** Stromschiene für Kathode, **38** Stromschiene für zwei Zellen Anode, **39** Schlauch Zuluft für Luftkathode, **40, 41** je Schlauch Abluft Luftkathode, **42** schematische Darstellung eines Reservoirs für die Elektrolytflüssigkeit, **43, 45** Rückführung Elektrolyt, **44** Zuführung für Elektrolyt als Bodenanströmung. In der **Figur 2e** ist die Silizium-Anode in einem Stapel **49** von Silizium-Anoden dargestellt. Die Halterung **46** des Silizium-Anoden Stapels, die Silizium-Anode **47** in Form einer rechteckigen Platte oder Scheibe, die mittels Habstandhalter **48** zu einem Stapel **49** angeordnet sind.

Die nachfolgenden Tabellen stellt geeignete Silizium-Partikeln dar, die zu Presslingen gesintert werden könnten. Die Partikel D sind den oben verwendeten analog.

**Tabelle 1: Röntgenamorphe Silizium-Partikel**

| **Silizium-Partikel** | Primärpartikel [nm] | Agglomerate und/oder Aggregate [nm] | Dotierung | Si [Gew.-%] |
|---|---|---|---|---|
| **A** | 5-15 | 150 - 1000 | < 0,1 Gew.-ppm | 99,99999 (electronic grade) |
| | | | Intrinsischer Halbleiter | |
| **B** | 100 - 300 | 200 - 2000 | < 10 Gew-ppm | Solar-grade |
| | | | | 99,999 |
| **C** | 100 - 300 | 400 - 1000 | 1 Gew.-% | 98,9 |
| | | | Intrinsischer p-Leiter | |
| **D** | 100 - 300 | 400 - 1000 | 1,8 Gew.-% Bor (5·10¹⁹/cm³) | 98,19 |

## Patentansprüche

1. Silizium-Anode, insbesondere zur Verwendung in elektrochemischen Primärzellen mit alkalischem Elektrolyten, **dadurch gekennzeichnet, dass** die Silizium-Anode ein dreidimensionaler Formkörper mit äußerer Oberfläche und innerer Oberfläche ist, wobei der dreidimensionale Formkörper umfasst Siliziumpartikel einer Partikelgröße von 1 nm bis 30 Mikrometer, und die Siliziumpartikel an Kontaktpunkten zu benachbarten Siliziumpartikeln stoffschlüssig (Silizium) miteinander verbunden sind, wobei der dreidimensionale Formkörper auf mindestens einem Teil seiner äußeren Oberfläche eine Beschichtung einer leitfähigen metallischen Legierung oder eines Metalls zur elektrischen Kontaktierung aufweist.

2. Silizium-Anode nach Anspruch 1, **dadurch gekennzeichnet, dass** der Formkörper der Silizium-Anode eine Dichte von 0,1 g/cm³ bis 2,3 g/cm₃ aufweist.

3. Silizium-Anode nach Anspruch 1 oder 2, **dadurch gekennzeichnet, dass** der Formkörper ausgewählt ist aus Polyeder, Kugel, Halbkugel, Kegel, insbesondere ausgewählt aus Prisma, Zylinder, Quader und Würfel.

4. Silizium-Anode nach einem der Ansprüche 1 bis 3, **dadurch gekennzeichnet, dass**
i) die stoffschlüssig miteinander verbundenen Siliziumpartikel miteinander i) verschmolzen und/oder ii) versintert und/oder iii) verpresst sind.

5. Silizium-Anode nach einem der Ansprüche 1 bis 4, **dadurch gekennzeichnet, dass** der dreidimensionale Formkörper der Silizium-Anode als im Wesentlichen ebene Platte vorliegt, wobei die Platte
i) eine Vorderseite und eine der Vorderseite gegenüberliegende Rückseite aufweist, wobei die Vorderseite einem Elektrolyten zugewandt sein wird und die Rückseite zumindest teilweise eine Beschichtung mit einer leitfähigen metallischen Legierung oder eines Metalls zur elektrischen Kontaktierung aufweist, oder
ii) eine Vorderseite und eine der Vorderseite gegenüberliegende Rückseite sowie eine oder mehrere die Vorder- und Rückseite verbindende(n), umlaufende(n), Seitenfläche(n) aufweist, wobei die Vorder- und Rückseite zumindest teilweise einem Elektrolyten zugewandt sein werden und ein Bereich der Seitenfläche(n) und optional ein Bereich der Vorder- und/oder Rückseite, der an die Seitenfläche(n) angrenzt, eine Beschichtung mit einer leitfähigen metallischen Legierung oder eines Metalls zur elektrischen Kontaktierung aufweist, insbesondere beträgt der Bereich der Vorder- und/oder Rückseite 1/3 bis 1/5000 der äußeren Oberfläche der Vorder- und/oder Rückseite.

6. Silizium-Anode nach einem der Ansprüche 1 bis 5, **dadurch gekennzeichnet, dass** das Massenverhältnis von Formkörper der Silizium Anode zur Beschichtung 1000000 : 1 bis 10 : 1 beträgt.

7. Silizium-Anode nach einem der Ansprüche 1 bis 6, **dadurch gekennzeichnet, dass** die Beschichtung der leitfähigen metallischen Legierung oder eines Metalls zur elektrischen Kontaktierung umfasst Elemente der Gruppen 3 bis 11, vorzugsweise der Gruppen 8. bis 11., und besonders bevorzugt der Gruppen 3 bis 11 der IV, V und VI Periode des Periodensystems (Hauptgruppen 3 bis 11), besonders bevorzugt sind die Elemente der Gruppe 8. bis 11. und der V und VI Periode, bevorzugt sind Edelmetalle, umfassend Gold, Ruthenium, Rhodium, Osmium, Iridium, Platin und/oder Silber.

8. Silizium-Anode nach einem der Ansprüche 1 bis 7, **dadurch gekennzeichnet, dass** der dreidimensionale Formkörper mit äußerer Oberfläche und innerer Oberfläche, wobei der Formkörper Siliziumpartikel umfasst, und wobei der Formkörper auf mindestens einem Teil seiner äußeren und inneren Oberfläche, die vorzugsweise keine Beschichtung mit einer leitfähigen metallischen Legierung oder eines Metalls zur elektrischen Kontaktierung aufweist, zumindest teilweise mit mindestens einem funktionellen Silan, funktionellen Siloxan, einer Mischung von funktionellen Silanen, einer Mischung von funktionellen Silanen und funktionellen Siloxanen und/oder einer Mischung von Siloxanen versehen oder ausrüstbar ist.

9. Silizium-Anode nach einem der Ansprüche 1 bis 8, **dadurch gekennzeichnet, dass** sie umfasst Siliziumpartikel mit einer mindestens bimodalen Partikelgrößenverteilung umfassend i) Siliziumpartikel der Partikelgröße von 1 nm bis 500 nm, und
ii) Siliziumpartikel mit Partikelgrößen von 1 bis 30 Mikrometer.

10. Silizium-Anode nach einem der Ansprüche 1 bis 9, **dadurch gekennzeichnet, dass** der Formkörper umfasst Siliziumpartikel und optional Kohlenstoff und Silizium enthaltende Partikel und optional Partikel mindestens einer allotropen Kohlenstoffmodifikation, wobei die Siliziumpartikel, insbesondere die Silizium-Anode, einen Gehalt an Eisen von größer gleich 0,02 mg/kg aufweist.

11. Silizium-Anode nach einem der Ansprüche 1 bis 10, **dadurch gekennzeichnet, dass** der Formkörper umfasst Siliziumpartikel und optional Kohlenstoff und Silizium enthaltende Partikel und optional Partikel mindestens einer allotropen Kohlenstoffmodifikation, wobei die Siliziumpartikel jeweils unabhängig voneinander, insbesondere die Silizium-Anode, jeweils unabhängig voneinander einen Gehalt an Eisen, Kalium, Zink, Aluminium, Kohlenstoff, Calcium, optional Titan, optional Sauerstoff, optional Kupfer von jeweils größer gleich 0,01 mg/kg aufweisen.

12. Silizium-Anode nach einem der Ansprüche 1 bis 11, **dadurch gekennzeichnet, dass** der Formkörper umfasst amorphe Siliziumpartikel, mono- oder polykristalline Siliziumpartikel.

13. Verfahren zur Herstellung einer Silizium-Anode, insbesondere nach einem der Ansprüche 1 oder 12, umfassend die Schritte,
- Bereitstellen von Siliziumpartikeln einer Partikelgröße von 1 nm bis 200 Mikrometer, insbesondere mit einer mindestens bimodalen Partikelgrößenverteilung umfassend i) Partikel der Partikelgröße von 1 nm bis 500 nm, und ii) Partikel mit Partikelgrößen von 1 bis 30 Mikrometer,
a) optional Herstellen einer Zusammensetzung umfassend die Siliziumpartikel und mindestens ein polymerisierbares Monomer oder eine Mischung von polymerisierbaren Monomeren, und Formen der Zusammensetzung zu einem Rohling des dreidimensionalen Formkörpers, und
b) Formen der Siliziumpartikel zu einem Rohling des dreidimensionalen Formkörpers, und
- Erhitzen des Rohlings des dreidimensionalen Formkörpers, optional unter Überdruck, und
- Erhalten des dreidimensionalen Formkörpers mit äußerer Oberfläche und innerer Oberfläche umfassend die Siliziumpartikel und,
- Beschichten des dreidimensionalen Formkörpers umfassend die Siliziumpartikel auf mindestens einem Teil seiner äußeren Oberfläche mit einer Beschichtung einer leitfähigen metallischen Legierung oder eines Metalls zur elektrischen Kontaktierung, und
- Erhalten einer Silizium-Anode umfassend einen dreidimensionalen Formkörper umfassend die Siliziumpartikel, mit einer Beschichtung einer leitfähigen metallischen Legierung oder eines Metalls zur elektrischen Kontaktierung auf mindestens einem Teil seiner äußeren Oberfläche.

14. Verfahren nach Anspruch 13, **dadurch gekennzeichnet, dass** die Siliziumpartikel, einen Gehalt an Eisen, Kalium, Zink, Aluminium, Kohlenstoff, Calcium, optional Titan, optional Sauerstoff, optional Kupfer von jeweils größer gleich 0,01 mg/kg aufweisen.

15. Silizium-Anoden erhältlich nach dem Verfahren nach Anspruch 13 oder 14.

16. Verwendung von Siliziumpartikeln umfassend einen Gehalt an Eisen, Kalium, Zink, Aluminium, Kohlenstoff, Calcium, optional Titan, optional Sauerstoff, optional Kupfer, von jeweils unabhängig größer gleich 0,01 mg/kg zur Herstellung von Silizium-Anoden umfassend einen dreidimensionalen Formkörper mit äußerer Oberfläche und innerer Oberfläche, wobei der dreidimensionale Formkörper umfasst Siliziumpartikel einer Partikelgröße von 1 nm bis 200 Mikrometer, und die Siliziumpartikel an Kontaktpunkten zu benachbarten Siliziumpartikeln stoffschlüssig mit einander verbunden sind, wobei vorzugsweise der dreidimensionale Formkörper auf mindestens einem Teil seiner äußeren Oberfläche eine Beschichtung einer leitfähigen metallischen Legierung oder eines Metalls zur elektrischen Kontaktierung aufweist.

17. Verwendung einer Silizium-Anode nach einem der Ansprüche 1 bis 15 als elektronenliefernden Kraftstoff, insbesondere zur Verwendung als Elektronenquelle in einer Anode einer Primärzelle.

18. Verwendung der Silizium-Anoden nach einem der Ansprüche 1 bis 15 als Anode in einer elektrochemischen Primärzelle oder als Anode in mindestens einer Primärzelle einer mehrzelligen Batterie, wobei die Batterie umfasst mindestens zwei bis 15.000 miteinander verbundene Primärzellen, vorzugsweise sind zwei bis 15.000 der miteinander verbundenen Primärzellen in Serie geschaltet, bevorzugt sind zwei bis 1000 Primärzellen in Serie geschaltet, wobei insbesondere die Silizium-Anode in allen Primärzellen die Anode bildet.
